(19) Europäisches Patentamt
European Patent Office
Office européen des brevets

(11) **EP 4 344 310 A1**

(12) **EUROPEAN PATENT APPLICATION**
published in accordance with Art. 153(4) EPC

(43) Date of publication:
**27.03.2024 Bulletin 2024/13**

(21) Application number: **21940250.0**

(22) Date of filing: **21.05.2021**

(51) International Patent Classification (IPC):
**H04W 52/00** (2009.01)    **H04W 68/00** (2009.01)

(52) Cooperative Patent Classification (CPC):
Y02D 30/70

(86) International application number:
**PCT/CN2021/095342**

(87) International publication number:
**WO 2022/241797 (24.11.2022 Gazette 2022/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **LI, Yanhua
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **POWER SAVING METHOD, POWER SAVING APPARATUS, AND STORAGE MEDIUM**

(57)    The present disclosure relates to a power saving method, a power saving apparatus, and a storage medium. The power saving method is applied to a radio access network device, and the method comprises: determining a mapping relationship between paging grouping information and paging grouping resources; and sending indication information to a terminal, the indication information being used to indicate the mapping relationship. By means of the present disclosure, a terminal determines power-saving signal resources corresponding to grouping information in which same is located, further determines that a paging message is monitored on the corresponding power-saving signal resources, and achieves a power-saving effect.

FIG. 2

**Description**

**TECHNICAL FIELD**

The present disclosure relates to the field of wireless communication technologies, and in particular to a method for saving power, an apparatus for saving power and a storage medium.

**BACKGROUND**

In a paging mechanism, if a terminal is waked up in a Paging Occasion (PO), there may be a situation that all terminals in the PO may be waked up. Alternatively, if terminals are waked up based on different paging probabilities of the terminals in the PO, there may be a situation that a terminal with a low paging probability may be falsely waked up. The above situations would cause excess power consumption of the terminals. Therefore, a paging group mechanism is proposed.

In the paging group mechanism, a terminal and a network device need to reach consistency with respect to paging group information before a paging message can be sent to a corresponding terminal. However, how the terminal determines a paging group resource according to corresponding paging group information and receives the paging message in the corresponding paging resource is a problem that needs to be solved at present.

**SUMMARY**

In order to overcome problems existing in the related arts, the present disclosure provides a method for saving power, an apparatus for saving power and a storage medium.

According to a first aspect of embodiments of the present disclosure, there is provided a method for saving power, applied to a radio access network device, and the method includes:
determining a mapping relationship between paging group information and a paging group resource; and sending indication information to a terminal, wherein the indication information is configured to indicate the mapping relationship.

In an implementation of the present disclosure, the determining the mapping relationship between the paging group information and the paging group resource includes:
determining a paging group resource set; and determining, based on the paging group information, the paging group resource corresponding to the paging group information in the paging resource set.

In an implementation of the present disclosure, the determining the mapping relationship between the paging group information and the paging group resource includes:
determining a plurality of paging group information sets including one or more paging group information; determining a paging group resource set corresponding to the paging group information set, wherein the paging group resource set includes one or more paging group resources; and determining, based on the paging group resource set corresponding to the paging group information set, a mapping relationship between each paging group information and the paging group resources.

In an implementation of the present disclosure, the determining the mapping relationship between the paging group information and the paging group resource includes:
determining an idle paging group resource set and/or an inactive paging group resource set; determining a paging group resource in the idle paging group resource set corresponding to idle paging information in the paging group information; and/or, determining a paging group resource in the inactive paging group resource set corresponding to inactive paging information in the paging group information.

In an implementation of the present disclosure, the determining the mapping relationship between the paging group information and the paging group resource includes:
determining an idle paging group resource set and idle paging group information; and determining an idle paging group resource in the idle paging group resource set corresponding to the idle paging group information.

In an implementation of the present disclosure, the determining the mapping relationship between the paging group information and the paging group resource includes:
determining an inactive paging group resource set and inactive paging group information; and determining an inactive paging group resource in the inactive paging group resource set corresponding to the inactive paging group information.

In an implementation of the present disclosure, the determining the mapping relationship between the paging group information and the paging group resource includes:
determining a paging group resource set, wherein the paging group resource set includes a plurality of idle paging group resources and/or a plurality of inactive paging group resources; determining an idle paging group resource among the plurality of idle paging group resources corresponding to idle paging group information; and/or determining an inactive paging group resource among the plurality of inactive paging group resources corresponding to inactive paging group information.

In an implementation of the present disclosure, the determining the mapping relationship between the paging group information and the paging group resource includes:

determining a paging group resource set, and in response to the paging group information being idle paging group information, determining a paging group resource in the paging group resource set corresponding to the idle paging group information; or, determining the paging group resource set, and in response to the paging group information being inactive paging group information, determining a paging group resource in the paging group resource set corresponding to the inactive paging group information.

In an implementation of the present disclosure, the determining the mapping relationship between the paging group information and the paging group resource includes:

determining a paging group resource set and idle paging group information and/or inactive state paging group information; and determining in the paging group resource set a same paging group resource for the idle paging group information and/or the inactive paging group information.

In an implementation of the present disclosure, the method further includes:

in response to the paging group resource not corresponding to the paging group information, determining that the paging group resource is a public paging group resource or a default paging group resource.

In an implementation of the present disclosure, the method further includes:

sending group resource density request information to a core network device, wherein the request information is configured to request the paging resource density of the paging group resource from the core network.

In an implementation of the present disclosure, the method further includes:

receiving group resource density response information sent by the core network, wherein the group resource density response information is configured to indicate a paging resource density of the paging group resource; and determining the paging resource density of the paging group resource based on the group resource density response information.

In an implementation of the present disclosure, the sending the indication information to the terminal includes:

sending the indication message to the terminal based on a broadcast signaling or a dedicated signaling.

In an implementation of the present disclosure, the sending the indication information to the terminal includes:

in response to the terminal being an inactive terminal, sending the indication information based on a Radio Resource Control (RRC) release message.

According to a second aspect of embodiments of the present disclosure, there is provided a method for saving power, applied to a terminal, and the method includes:

receiving an indication message sent by a radio access network, wherein the indication information is configured to indicate a mapping relationship, and the mapping relationship is a mapping relationship between paging group information and a paging group resource; and determining, based on the indication message, a paging group resource corresponding to paging group information where the terminal is located.

In an implementation of the present disclosure, the determining, based on the indication message, the paging group resource corresponding to the paging group information where the terminal is located includes:

in response to the terminal being included in the paging group information, based on the mapping relationship between the paging group information and the paging group resource, determining the paging group resource corresponding to the paging group information where the terminal is located.

In an implementation of the present disclosure, the paging group information group set includes one or more paging group information; and

the determining, based on the indication message, the paging group resource corresponding to the paging group information where the terminal is located includes:

in response to the paging group information where the terminal is located being included in the paging group information set, determining a paging group resource set corresponding to the paging group information set; and based on the mapping relationship between the paging group information and the paging group resource, determining the paging group resource in the paging group resource set corresponding to the paging group information where the terminal is located.

In an implementation of the present disclosure, the determining, based on the indication message, the paging group resource corresponding to the paging group information where the terminal is located includes:

in response to the terminal being in an idle state, determining the paging group resource in an idle paging group resource set corresponding to the paging group information where the terminal is located; or in response to the terminal being in an inactive state, determining the paging group resource in an inactive paging group resource set corresponding to the paging group information where the terminal is located.

In an implementation of the present disclosure, the paging group resource set includes a plurality of idle paging group resources and a plurality of inactive paging group resources; and

the determining, based on the indication message, the paging group resource corresponding to the paging group information where the terminal is located includes:

in response to the terminal being in an idle state, determining the paging group resource, among a plurality of idle paging group resources included in the paging group resource set, corresponding to the paging group information where the terminal is located; or in response to the terminal being in an inactive state, determining the paging group resource, among a plurality of inactive paging group resources included in the paging group resource set, corresponding to the paging group information where the terminal is located.

In an implementation of the present disclosure, the determining, based on the indication message, the paging group resource corresponding to the paging group information where the terminal is located includes:

in response to the terminal being in an idle state, determining in a paging group resource set the paging group resource corresponding to the paging group information where the terminal is located; or, in response to the terminal being in an inactive state, determining in the paging group resource set the paging group resource corresponding to the paging group information where the terminal is located.

In an implementation of the present disclosure, the determining, based on the indication message, the paging group resource corresponding to the paging group information where the terminal is located includes:

in response to the terminal being in an idle state or an inactive state, determining a paging group resource among paging group resources corresponding to the idle state or the inactive state, wherein the paging group resource corresponding to the idle state is the same as the paging group resource corresponding to the inactive state.

In an implementation of the present disclosure, the method further includes:

in response to the terminal not being included in the paging group information, determining that a paging group resource corresponding to the terminal is a public paging group resource or a default paging group resource.

In an implementation of the present disclosure, the receiving the indication message sent by the radio access network includes:

receiving, based on a broadcast signaling or a dedicated signaling, the indication message sent by the radio access network device.

In an implementation of the present disclosure, the receiving the indication message sent by the radio access network device includes:

in response to the terminal being an inactive terminal, receiving, based on a RRC release message, the indication message sent by the radio access network device.

According to a third aspect of embodiments of the present disclosure, there is provided a method for saving power, applied to a core network device, and the method includes:

receiving group resource density request information sent by a radio access network device, wherein the group resource density request information is configured to request a paging resource density of a paging group resource from the core network; and determining the paging resource density of the paging group resource based on the group resource density request information.

In an implementation of the present disclosure, the method further includes:

sending group resource density response information to the radio access network device, wherein the group resource density response information is configured to indicate the paging resource density of the paging group resource.

In an implementation of the present disclosure, the determining the mapping relationship between the paging group information and the paging group resource includes:

determining a paging group resource set; and determining, based on the paging group information, the paging group resource corresponding to the paging group information in the paging resource set.

In an implementation of the present disclosure, the determining the mapping relationship between the paging group information and the paging group resource includes:

determining a plurality of paging group information sets including one or more paging group information; determining a paging group resource set corresponding to the paging group information set, wherein the paging group resource set includes one or more paging group resources; and determining, based on the paging group resource set corresponding to the paging group information set, a mapping relationship between each paging group information and the paging group resources.

In an implementation of the present disclosure, the determining the mapping relationship between the paging group information and the paging group resource includes:

determining an idle paging group resource set and/or an inactive paging group resource set; determining a paging group resource in the idle paging group resource set corresponding to idle paging information in the paging group information; and/or, determining a paging group resource in the inactive paging group resource set corresponding to inactive paging information in the paging group information.

In an implementation of the present disclosure, the determining the mapping relationship between the paging group information and the paging group resource includes:

determining an idle paging group resource set and idle paging group information; and determining an idle paging group resource in the idle paging group resource set corresponding to the idle paging group information.

In an implementation of the present disclosure, the determining the mapping relationship between the paging group information and the paging group resource includes:

determining an inactive paging group resource set and the inactive paging group information; and determining an inactive paging group resource in the inactive paging group resource set corresponding to the inactive paging group information.

In an implementation of the present disclosure, the determining the mapping relationship between the paging group information and the paging group resource includes:

determining a paging group resource set, wherein the paging group resource set includes a plurality of idle paging group resources and/or a plurality of inactive paging group resources; determining an idle paging group resource among the plurality of idle paging group resources corresponding to idle paging group information; and/or determining an inactive paging group resource among the plurality of inactive paging group resources corresponding to inactive paging group information.

In an implementation of the present disclosure, the determining the mapping relationship between the paging group information and the paging group resource includes:

determining a paging group resource set, and in response to the paging group information being idle paging group information, determining a paging group resource in the paging group resource set corresponding to the idle paging group information; or, determining the paging group resource set, and in response to the paging group information being inactive paging group information, determining a paging group resource in the paging group resource set corresponding to the inactive paging group information.

In an implementation of the present disclosure, the determining the mapping relationship between the paging group information and the paging group resource includes:

determining a paging group resource set and idle paging group information and/or inactive state paging group information; and determining in the paging group resource set a same paging group resource for the idle paging group information and/or the inactive paging group information.

In an implementation of the present disclosure, the method further includes:

in response to the paging group resource not corresponding to the paging group information, determining that the paging group resource is a public paging group resource or a default paging group resource.

In an implementation of the present disclosure, the method further includes:

sending group resource density request information to a core network device, wherein the request information is configured to request the paging resource density of the paging group resource from the core network.

In an implementation of the present disclosure, the method further includes:

receiving group resource density response information sent by the core network, wherein the group resource density response information is configured to indicate a paging resource density of the paging group resource; and determining the paging resource density of the paging group resource based on the group resource density response information.

In an implementation of the present disclosure, the sending the indication information to the terminal includes: sending the indication message to the terminal based on a broadcast signaling or a dedicated signaling.

In an implementation of the present disclosure, the sending the indication information to the terminal includes: in response to the terminal being an inactive terminal, sending the indication information based on a Radio Resource Control (RRC) release message.

According to a fourth aspect of embodiments of the present disclosure, there is provided an apparatus for saving power, applied to a radio access network device, and the apparatus includes:

a determination module, configured to determine a mapping relationship between paging group information and a paging group resource; and a sending module, configured to send indication information to a terminal, wherein the indication information is configured to indicate the mapping relationship.

In an implementation of the present disclosure, the determination module is configured to:

determine a paging group resource set, and determine in the paging resource set, based on the paging group information, the paging group resource corresponding to the paging group information

In an implementation of the present disclosure, the determination module is configured to:

determine a plurality of paging group information sets including one or more paging group information; determine a paging group resource set corresponding to the paging group information set, wherein the paging group resource set includes one or more paging group resources; and determine, based on the paging group resource set corresponding to the paging group information set, a mapping relationship between each paging group information and a paging group resource.

In an implementation of the present disclosure, the determination module is configured to:

determine an idle paging group resource set and/or an inactive paging group resource set; determine in the idle paging group resource set a paging group resource corresponding to idle paging information in the paging group information; and/or, determine in the inactive paging group resource set a paging group resource corresponding to inactive paging information in the paging group information.

In an implementation of the present disclosure, the determination module is configured to:

determine an idle paging group resource set and idle paging group information; and determine in the idle paging group resource set an idle paging group resource corresponding to the idle paging group information.

In an implementation of the present disclosure, the determination module is configured to:

determine an inactive paging group resource set and inactive paging group information; and determine in the inactive paging group resource set an inactive paging group resource corresponding to the inactive paging group information.

In an implementation of the present disclosure, the determination module is configured to:

determine a paging group resource set, wherein the paging group resource set includes a plurality of idle paging group resources and/or a plurality of inactive paging group resources; determine an idle paging group resource, among the plurality of idle paging group resources, corresponding to idle paging group information; and/or determine an inactive paging group resource, among the plurality of inactive paging group resources, corresponding to inactive paging group information.

In an implementation of the present disclosure, the determination module is configured to:

determine a paging group resource set, and in response to the paging group information being idle paging group information, determining in the paging group resource set a paging group resource corresponding to the idle paging group information; or, determine the paging group resource set, and in response to the paging group information being inactive paging group information, determine in the paging group resource set a paging group resource corresponding to the inactive paging group information.

In an implementation of the present disclosure, the determination module is configured to:

determine a paging group resource set and idle paging group information and/or inactive state paging group information; and determine in the paging group resource set a same paging group resource for the idle paging group information and/or the inactive paging group information.

In an implementation of the present disclosure, the determination module is further configured to:

in response to the paging group resource not corresponding to the paging group information, determine that the paging group resource is a public paging group resource or a default paging group resource.

In an implementation of the present disclosure, the sending module is further configured to:

send group resource density request information to a core network device, wherein the request information is configured to request a paging resource density of the paging group resource from the core network.

In an implementation of the present disclosure, the apparatus further includes: a receiving module; and

the receiving module is configured to receive group resource density response information sent by the core network, wherein the group resource density response information is configured to indicate the paging resource density of the paging group resource, and the determination module is configured to determine the paging resource density of the paging group resource based on the group resource density response information.

In an implementation of the present disclosure, the sending module is configured to:

send the indication message to the terminal based on a broadcast signaling or a dedicated signaling.

In an implementation of the present disclosure, the sending module is configured to:

send the indication information based on a Radio Resource Control (RRC) release message in response to the terminal being an inactive terminal.

According to a fifth aspect of embodiments of the present disclosure, there is provided an apparatus for saving power, applied to a terminal, and the apparatus includes:

a receiving module, configured to receive an indication message sent by a radio access network, wherein the indication information is configured to indicate a mapping relationship, and the mapping relationship is a mapping relationship between paging group information and a paging group resource; and a determination module, configured to determine, based on the indication message, a paging group resource corresponding to paging group information where the terminal is located.

In an implementation of the present disclosure, the determination module is configured to:

in response to the terminal being included in the paging group information, determine, based on the mapping relationship between the paging group information and the paging group resource, the paging group resource corresponding to the paging group information where the terminal is located.

In an implementation of the present disclosure, a paging group information group set includes one or more paging group information; and

the determination module is configured to:

in response to the paging group information where the terminal is located being included in the paging group information set, determine a paging group resource set corresponding to the paging group information set; and based on the mapping relationship between the paging group information and the paging group resource, determine in the paging group resource set the paging group resource corresponding to the paging group information where the terminal is located.

In an implementation of the present disclosure, the determination module is configured to:

in response to the terminal being in an idle state, determine in an idle paging group resource set the paging group resource corresponding to the paging group information where the terminal is located; or in response to the terminal being in an inactive state, determine in an inactive paging group resource set the paging group resource corresponding to the paging group information where the terminal is located.

In an implementation of the present disclosure, a paging group resource set includes a plurality of idle paging group resources and a plurality of inactive paging group resources; and
the determination module is configured to:

in response to the terminal being in an idle state, determine the paging group resource, among the plurality of idle paging group resources included in the paging group resource set, corresponding to the paging group information where the terminal is located; or in response to the terminal being in an inactive state, determine the paging group resource, among the plurality of inactive paging group resources included in the paging group resource set, corresponding to the paging group information where the terminal is located.

In an implementation of the present disclosure, the determination module is configured to:
in response to the terminal being in an idle state, determine in a paging group resource set the paging group resource corresponding to the paging group information where the terminal is located; or, in response to the terminal being in an inactive state, determine in the paging group resource set the paging group resource corresponding to the paging group information where the terminal is located.

In an implementation of the present disclosure, the determining, based on the indication message, the paging group resource corresponding to the paging group information where the terminal is located includes:
in response to the terminal being in an idle state or an inactive state, determining a paging group resource among paging group resources corresponding to the idle state or the inactive state, wherein the paging group resource corresponding to the idle state is the same as the paging group resource corresponding to the inactive state.

In an implementation of the present disclosure, the determination module is further configured to:
in response to the terminal not being included in the paging group information, determine that a paging group resource corresponding to the terminal is a public paging group resource or a default paging group resource.

In an implementation of the present disclosure, the receiving module is configured to:
receive, based on a broadcast signaling or a dedicated signaling, the indication message sent by the radio access network device.

In an implementation of the present disclosure, the receiving module is configured to:
in response to the terminal being an inactive terminal, receive, based on a RRC release message, the indication message sent by the radio access network device.

According to a sixth aspect of embodiments of the present disclosure, there is provided an apparatus for saving power, which is applied to a core network device, and the apparatus includes:
a receiving module, configured to receive group resource density request information sent by a radio access network device, wherein the group resource density request information is configured to request a paging resource density of a paging group resource from the core network, and a determination module, configured to determine the paging resource density of the paging group resource based on the group resource density request information.

In an implementation of the present disclosure, the apparatus further includes: a sending module; and
the sending module is configured to send group resource density response information to the radio access network device, wherein the group resource density response information is configured to indicate the paging resource density of the paging group resource.

According to a seventh aspect of embodiments of the present disclosure, there is provided an apparatus for saving power, including:
a processor; and a memory configured to store instructions executable by the processor; wherein the processor is configured to execute the method for saving the power in the first aspect or any implementation of the first aspect, the method for saving the power in the second aspect or any implementation of the second aspect, or the method for saving the power in the third aspect or any implementation of the third aspect.

According to an eighth aspect of embodiments of the present disclosure, there is provided a non-transitory computer-readable storage medium, wherein instructions in the storage medium, when executed by a processor of a mobile terminal, enables the mobile terminal to execute the method for saving the power in the first aspect or any implementation of the first aspect, the method for saving the power in the second aspect or any implementation of the second aspect, or the method for saving the power in the third aspect or any implementation of the third aspect.

The technical solution provided by embodiments of the present disclosure may include the following beneficial effects: the paging group information and the paging group resource are determined, so that the terminal determines a resource of a power saving signal corresponding to the group information where the terminal is located, and further determines to monitor the paging message in the corresponding power saving signal resource to save power.

It should be noted that the above general description and the following detailed description are merely exemplary and explanatory and should not be construed as limiting of the disclosure.

## BRIEF DESCRIPTION OF THE DRAWINGS

The accompanying drawings here, which are incorporated in and constitute a part of this specification, illustrate embodiments consistent with the disclosure and together with the description serve to explain the principles of the disclosure.

FIG. 1 illustrates a diagram of a communication system architecture of a network device and a terminal according to an embodiment of the present disclosure.
FIG. 2 illustrates a flowchart of a method for saving power according to an embodiment of the present disclosure.
FIG. 3 illustrates a flowchart of a method for saving power according to an embodiment of the present disclosure.
FIG. 4 illustrates a flowchart of a method for saving power according to an embodiment of the present disclosure.
FIG. 5 illustrates a flowchart of a method for saving power according to an embodiment of the present disclosure.
FIG. 6 illustrates a flowchart of a method for saving power according to an embodiment of the present disclosure.
FIG. 7 illustrates a flowchart of a method for saving power according to an embodiment of the present disclosure.
FIG. 8 illustrates a flowchart of a method for saving power according to an embodiment of the present disclosure.
FIG. 9 illustrates a flowchart of a method for saving power according to an embodiment of the present disclosure.
FIG. 10 illustrates a flowchart of a method for saving power according to an embodiment of the present disclosure.
FIG. 11 illustrates a flowchart of a method for saving power according to an embodiment of the present disclosure.
FIG. 12 illustrates a flowchart of a method for saving power according to an embodiment of the present disclosure.
FIG. 13 illustrates a flowchart of a method for saving power according to an embodiment of the present disclosure.
FIG. 14 illustrates a flowchart of a method for saving power according to an embodiment of the present disclosure.
FIG. 15 illustrates a flowchart of a method for saving power according to an embodiment of the present disclosure.
FIG. 16 illustrates a flowchart of a method for saving power according to an embodiment of the present disclosure.
FIG. 17 illustrates a flowchart of a method for saving power according to an embodiment of the present disclosure.
FIG. 18 illustrates a flowchart of a method for saving power according to an embodiment of the present disclosure.
FIG. 19 illustrates a flowchart of a method for saving power according to an embodiment of the present disclosure.
FIG. 20 illustrates a flowchart of a method for saving power according to an embodiment of the present disclosure.
FIG. 21 illustrates a flowchart of a method for saving power according to an embodiment of the present disclosure.
FIG. 22 illustrates a flowchart of a method for saving power according to an embodiment of the present disclosure.
FIG. 23 illustrates a flowchart of a method for saving power according to an embodiment of the present disclosure.
FIG. 24 illustrates a flowchart of a method for saving power according to an embodiment of the present disclosure.
FIG. 25 illustrates a flowchart of a method for saving power according to an embodiment of the present disclosure.
FIG. 26 illustrates a flowchart of a method for saving power according to an embodiment of the present disclosure.
FIG. 27 illustrates a flowchart of a method for saving power according to an embodiment of the present disclosure.
FIG. 28 illustrates a block diagram of an apparatus for saving power according to an embodiment of the present disclosure.
FIG. 29 illustrates a block diagram of an apparatus for saving power according to an embodiment of the present disclosure.
FIG. 30 illustrates a block diagram of an apparatus for saving power according to an embodiment of the present disclosure.
FIG. 31 illustrates a block diagram of a device for saving power according to an embodiment of the present disclosure.

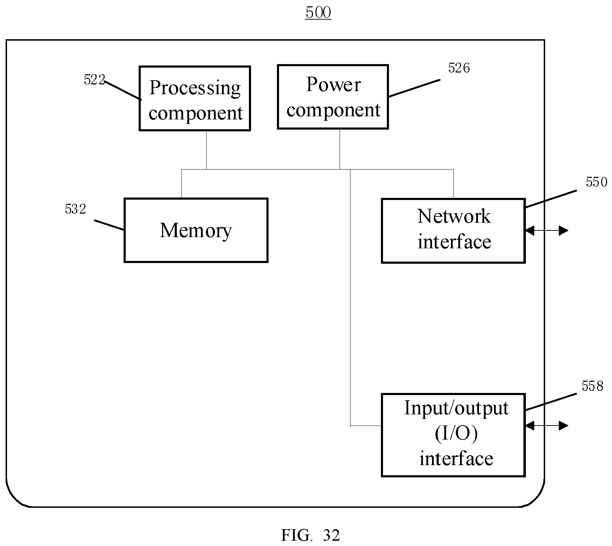

FIG. 32 illustrates a block diagram of a device for saving power according to an embodiment of the present disclosure.

## DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the present disclosure as recited in the appended claims.

In a paging mechanism, if a terminal is waked up in a Paging Occasion (PO), there may be a situation that all terminals in the PO may be waked up. Alternatively, if terminals are waked up based on different paging probabilities of the terminals in the PO, there may be a situation that a terminal with a low paging probability may be falsely waked up. The above situations would cause excess power consumption of the terminals. Therefore, in a conference discussion on the paging group mechanism, a mechanism for the paging group is proposed to reduce the false paging to the terminal. In the related arts, it is discussed that the paging group information is placed in Paging Downlink Control Information (DCI), or in a Paging Early Indication (PEI). However, no matter how the paging group information is carried, the terminal and the network device (for example, a Radio Access Network (RAN) device and a core network device) need to agree on a group in which the terminal is located in order to normally send a paging message to the terminal. Therefore, the paging group mechanism and a Wake Up Signal (WUS) may be combined.

A Long Term Evolution (LTE) protocol also defines a probability-based group mechanism, that is, a paging probability (Pnas) is negotiated in advance between the terminal and the core network device, and the radio access network device broadcasts a relationship between Pnas and a paging group, enabling the terminal to determine a paging group where it is located. Upon the arrival of the paging message at the radio access network device from the core network device, the core network device will also notify the radio access network device of the Pnas of the terminal, which is used by the radio access network device to determine the paging group information of the terminal. In this way, the terminal, the radio access network device and the core network device reach consistency with respect to the paging group information.

Further, the radio access network device corresponds part of paging probabilities to a wake up signal group set. After the terminal first determines the wake up signal group set, a wake up signal group is obtained in the wake up signal group set by taking the modulus of a terminal ID, and the formula may be expressed as:

$$wg = floor\left(floor\left(\frac{UE\_ID}{N \times N_s}\right)/N_n\right) \bmod N_w$$

where, UE_ID, N, Ns, Nn and W are defined in clause 7.1.

Nw is the number of WUS groups in the selected WUS group set.
wg is an index of a WUS group in the selected WUS group set, determined as defined in clause 7.5.2, 0 .. $N_w$-1.
where nB: 4T, 2T, T, T/2, T/4, T/8, T/16, T/32, T/64, T/128, and T/256, and for NB-IoT, it may also be T/512 and T/1024.

- N: min(T, nB)
- Ns: max(1, nB/T)
- Nn: the number of paging narrowbands (for P-RNTI monitored on a MPDCCH) or paging carriers (for P-RNTI monitored on a NPDCCH), which is as follows.

Therefore, N is a paging frame density in a time domain, and Ns is a paging density in a paging frame in the time domain; Nn is a paging narrowband; Nw is the total number of groups of WUS resources in the group set.

For an idle terminal, T=min{UE specific cycle, default cycle}

For an inactive user: T=min{UE specific cycle, default cycle, RAN paging cycle}

It can be seen from this that a mapping relationship between a power saving signal (such as the wake up signal) and paging group information allocated by the network device is not mentioned in the protocol. Based on this, the present disclosure provides a method for saving power, so as to propose the mapping relationship between the power saving signal and the paging group information. Through the mapping relationship proposed in the present disclosure, the terminal can determine a resource for a power saving signal corresponding to group information where it is located, and further determine to monitor a paging message on the corresponding resource for the power saving signal, thereby achieving the power saving effect.

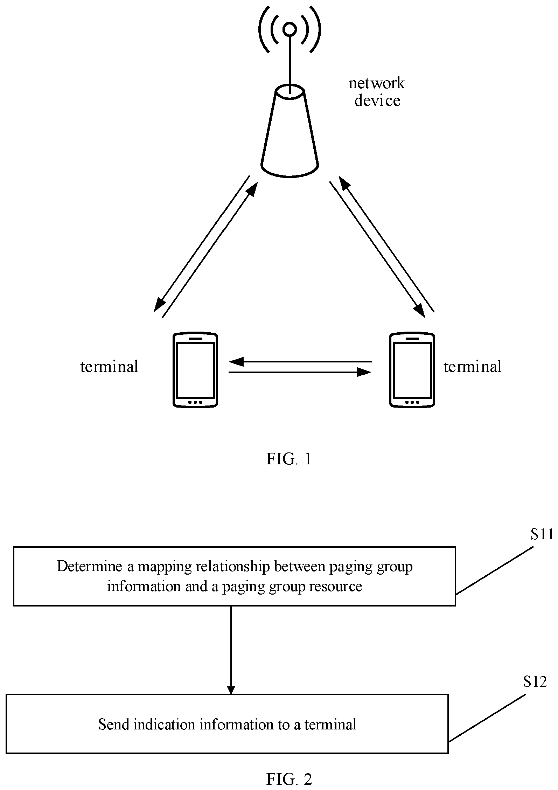

FIG. 1 illustrates a diagram of a communication system architecture of a network device and a terminal according to an embodiment of the present disclosure. The communication method provided by the present disclosure may be applied to the communication system architecture diagram shown in FIG. 1. As shown in FIG. 1, a network-side device may send a signaling based on the architecture shown in FIG. 1.

It can be understood that the communication system of the network device and the terminal shown in FIG. 1 is merely a schematic illustration, and the wireless communication system may further include other network devices, such as a core network device, a wireless relay device, and a wireless backhaul device, which are not shown in FIG. 1. Embodiments of the present disclosure do not limit the number of network devices and the number of terminals included in the wireless communication system.

It can be further understood that the wireless communication system of embodiments of the present disclosure is a network providing a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance. According to the capacity, speed, delay and other factors of different networks, the networks may be divided into the 2G (generation) network, the 3G network, the 4G network or the future evolution network, such as the 5G network. The 5G network may also be referred to as a new radio (NR) network. For convenience of description, the present disclosure may sometimes refer to a wireless communication network simply as a network.

Further, the network device involved in the present disclosure may also be referred to as a radio access network device. The radio access network device may be: a base station, an evolved node B, a home base station, an access point (AP) in a wireless fidelity (WIFI) system, a wireless relay node, a wireless backhaul node, a transmission point (TP) or a transmission and reception point (TRP), etc., may also be a gNB in the NR system, or may also be a component or part of devices that constitute the base station. When the wireless communication system is a vehicle-to-everything (V2X) communication system, the network device may also be a vehicle-mounted device. It can be understood that in embodiments of the present disclosure, the specific technologies and specific device forms adopted by the network device are not limited.

Further, the terminal involved in the present disclosure may also be referred to as a terminal device, user equipment (UE), a mobile station (MS), a mobile terminal (MT), etc., and is a device that provides voice and/or data connectivity to a user. For example, the terminal may be a handheld device with a wireless connectivity function, a vehicle-mounted device, etc. At present, some examples of terminals are: mobile phones, pocket personal computers (PPCs), palm computers, personal digital assistants (PDAs), notebook computers, tablet computers, wearable devices, or vehicle-mounted devices, etc. In addition, when the wireless communication system is the vehicle-to-everything (V2X) communication system, the terminal device may also be a vehicle-mounted device. It can be understood that embodiments of the present disclosure do not limit the specific technologies and specific device forms adopted by the terminal.

FIG. 2 illustrates a flowchart of a method for saving power according to an embodiment of the present disclosure. As shown in FIG. 2, the method for saving the power is applied in a radio access network device and includes steps S11 and S12.

In the step S11, a mapping relationship between paging group information and a paging group resource is determined.

In embodiments of the present disclosure, the radio access network device establishes, based on a paging group for a terminal, the mapping relationship for the terminal between the paging group information and the paging group resource.

In some embodiments of the present disclosure, the paging group resource may be configured for the PO. The paging group resource may be a power saving signal (for example, the WUS). For example, different paging group information is indicated based on power saving signals in different time-frequency domains. The paging group resource may also be a reserved bit in the paging DCI. For example, paging group information corresponding to different paging group resources is respectively indicated based on bit1 to bit5.

In the step S12, indication information is sent to the terminal.

In embodiments of the present disclosure, the radio access network device notifies the terminal of the mapping relationship by sending the indication information to the terminal.

Through the method for saving the power provided by the present disclosure, the radio access network device can establish for the terminal the mapping relationship between the paging group information and the paging group resource, so that the terminal monitors the paging message in the corresponding paging group resource, avoiding the false paging wake up and achieving the effect of power saving.

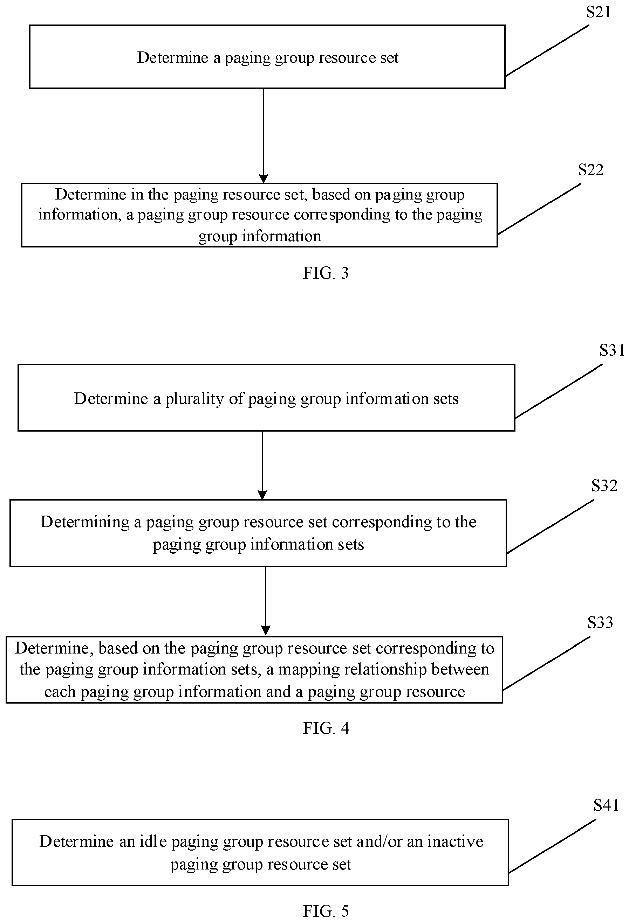

FIG. 3 illustrates a flowchart of a method for saving power according to an embodiment of the present disclosure. As shown in FIG. 3, the method for saving the power is applied in the radio access network device and includes steps S21 and S22.

In the step S21, a paging group resource set is determined.

In embodiments of the present disclosure, the radio access network device configures the paging group resource. The paging group resource as the power saving signal is taken as an example.

In some embodiments of the present disclosure, the radio access network device configures a power saving signal resource set for the terminal. For example, the power saving signal resource set includes 10 paging group resources, which may be {0, 1, 2, 3, 4, 5, 6, 7, 8, 9}. It should be understood that each paging group resource included in the power saving signal resource set includes a plurality of power saving signals.

In some embodiments of the present disclosure, the paging group resource is a reserved bit in the paging DCI. For example, there are 5 reserved bits in the paging DCI, which may be {0, 1, 2, 3, 4}, which is the resource set of paging group resources configured by the radio access network device for the terminal.

In the step S22, based on the paging group information, the paging group resource corresponding to the paging group information is determined in the paging resource set.

The determining in the paging resource set the paging group resource corresponding to the paging group information may be that one paging group information corresponds to one paging group resource, or one paging group information corresponds to a plurality of paging group resources, or a plurality of paging group information corresponds to one paging group resource, which is not specifically limited by the present disclosure.

In embodiments of the present disclosure, the radio access network device establishes, based on the paging group information of the terminal, for each paging group information the mapping relationship from the paging group information to the paging group resource.

In some embodiments of the present disclosure, taking the paging group resource as the power saving signal as an example, the power saving signal resource set includes 10 paging group resources, including {0, 1, 2, 3, 4, 5, 6, 7, 8, 9}. An enumeration manner may be used to establish the corresponding paging group resource for each paging group information.

For example, for each paging group information, a power saving signal resource corresponding to the paging group information is directly given in the enumeration manner. Taking grouping ID as an example, the paging group information of the terminal includes 4 groups, which may be Group ID0, Group ID1, Group ID2, and Group ID3. The paging group resource corresponding to each paging group information may be given as the following mapping relationship:

Group ID0: {0, 1};
Group ID1: {2, 3, 4};
Group ID2: {4, 6, 7, 8};
Group ID3: {9}.

In some embodiments of the present disclosure, taking the paging group resource as the power saving signal as an example, the power saving signal resource set includes 10 paging group resources, including {0, 1, 2, 3, 4, 5, 6, 7, 8, 9}. A bitmap manner may be used to establish a corresponding paging group resource for each paging group information.

For example, for each paging group information, the power saving signal resource corresponding to the paging group information is directly given in the bitmap manner. Taking grouping ID as an example, the paging group information of the terminal includes 4 groups, which may be Group ID0, Group ID1, Group ID2, and Group ID3. The paging grouping resource corresponding to each paging group information may be given as the following mapping relationship:

Group ID0: 1100000000;
Group ID1: 0011100000;
Group ID2: 0000011110;
Group ID3: 0000000001.

In some embodiments of the present disclosure, taking the paging group resource as the power saving signal as an example, the power saving signal resource set includes 10 paging group resources, including {0, 1, 2, 3, 4, 5, 6, 7, 8, 9}. An upper-lower boundary manner may be used to establish the corresponding paging group resource for each paging group information.

For example, for each paging group information, the power saving signal resource corresponding to the paging group information is directly given in the upper-lower boundary manner. Taking the grouping ID as an example, the paging group information of the terminal includes 4 groups, which may be Group ID0, Group ID1, Group ID2, and Group ID3. The paging grouping resource corresponding to each paging group information may be given as the following mapping relationship:

Group ID0: 1, it is determined that the upper boundary is 1 and the lower boundary is a default value 0. When threshold 1 is 1, both paging group resource 0 and paging group resource 1 below 1 belong to the paging group resource corresponding to the paging group information.

Group ID1: 4, it is determined that the upper boundary is 4 and the lower boundary is a default value 2. When threshold 2 is 4, paging group resource 2, paging group resource 3 and paging group resource 4 below 4 all belong to the paging group resource corresponding to the paging group information.

Group ID2: 8, it is determined that the upper boundary is 8 and the lower boundary is a default value 5. When threshold 3 is 8, paging group resource 5, paging group resource 6, paging group resource 7 and paging group resource 8 below 8 all belong to the paging group resource corresponding to the paging group information.

Group ID3: 9, and paging group resources above 9 belong to the paging group resource corresponding to the paging group information.

In some embodiments of the present disclosure, taking the paging group resource as the power saving signal as an example, the power saving signal resource set includes 10 paging group resources, including {0, 1, 2, 3, 4, 5, 6, 7, 8, 9}. A calculation manner may also be used to establish the corresponding paging group resource for each paging group information.

For example, for each paging group information, the power saving signal resource corresponding to the paging group information is directly given in the calculation manner. For example, based on the number of paging group information, resources in the paging group resource set are evenly allocated. Taking the paging group information of the terminal including 4 groups as an example, the 10 paging group resources are evenly allocated to the 4 paging group information. Each paging resource information group corresponds to two paging group resources, and the remaining paging group resources can correspond to any paging group information.

As an embodiment, the paging group may also be expressed in terms of a terminal paging probability or paging level, or a terminal power level.

For example:

paging probability 10%: {0, 1};
paging probability 20%: {2, 3, 4};
paging probability 30%: {4, 6, 7, 8};
paging probability 40%: {9}.
For example:
low paging probability level: {0, 1};
medium paging probability level: {2, 3, 4};
high paging probability level: {4, 6, 7, 8};

A specific paging group expression manner used may be configured by the network or agreed upon by a protocol. For example, the core network notifies the base station that whether the displayed group ID (GroupID0, GroupID1 mentioned above or the like) or the paging group probability manner will be used.

FIG. 4 illustrates a flowchart of a method for saving power according to an embodiment of the present disclosure. As shown in FIG. 4, the method for saving the power is applied in the radio access network device and includes steps S31-S33.

In the step S31, a plurality of paging group information sets are determined.

The paging group information set includes one or more paging group information.

In embodiments of the present disclosure, the radio access network device may compose one or more paging group information into one paging group information set, thereby determining the plurality of paging group information sets.

In the step S32, a paging group resource set corresponding to the paging group information set is determined.

The paging group resource set includes one or more paging group resources.

In embodiments of the present disclosure, the radio access network device may determine the corresponding paging group resource set for each paging group resource set.

In the step S33, based on the paging group resource set corresponding to the paging group information set, the mapping relationship between each paging group information and the paging group resource is determined.

In embodiments of the present disclosure, the radio access network device establishes a correspondence between the paging group information set and the paging group resource set, and determines, based on the established correspondence, the mapping relationship between each paging group information in the paging group information set and the paging group resource in the corresponding paging group resource set.

For example, the paging group information as 10 groups is taken as an example, which includes {0, 1, 2, 3, 4, 5, 6, 7, 8, 9}, see Table 1. As shown in Table 1, based on the terminal paging probability in the 10 groups of paging group information, the 10 groups of paging group information may be divided into two paging group information sets, that is, paging group information set 0 and paging group information set 1, where paging group information set 0 includes {0, 1, 2, 3, 4}, and paging group information set 1 includes {5, 6, 7, 8, 9}. The paging group resource sets corresponding to the paging group information sets are determined, respectively, which includes paging group resource set 0 and paging group resource set 1. The paging group resource set 0 (Group set0) further includes paging group resource 0 (No.0) and paging group resource 1 (No.1), and the paging group resource set 1 (Group set1) further includes paging group resource 2 (No. 2) and paging group resource 3 (No. 3).

It should be noted that the radio access network device may combine some groups with little difference in characteristics into one paging group set, and then configure the paging group resource in units of set, so as to achieve the purpose of reducing signaling overhead and the reservation of the paging group resource, and avoid a situation where the paging group resources are reserved one by one for each paging group information.

Table 1

| 0, 1, 2, 3, 4 | Group set0 | No.0 |
| | | No.1 |
| 5, 6, 7, 8, 9 | Group set1 | No.2 |
| | | No.3 |

It can be understood that each element in Table 1 exists independently, and these elements are illustratively listed in the same table, but it does not mean that all elements in the table must exist at the same time as shown in the table. A value of each element does not depend on a value of any other element in Table 1. Therefore, those skilled in the art can understand that the value of each element in Table 1 is an independent embodiment.

As an embodiment, the paging group set may also be expressed as a set consisting of a paging probability range or a paging probability level or a terminal power level.

Table 2

| 0%~40% | Group set0 | No.0 No.1 |
|---|---|---|
| 40%~100% | Group set1 | No.2 No.3 |

It can be understood that each element in Table 2 exists independently, and these elements are illustratively listed in the same table, but it does not mean that all elements in the table must exist at the same time as shown in the table. A value of each element does not depend on a value of any other element in Table 2. Therefore, those skilled in the art can understand that the value of each element in Table 2 is an independent embodiment.

In some embodiments of the present disclosure, the radio access network device determines the mapping relationship between the paging group information in the paging group information set and the paging group resource in the paging group resource set by using any of the following implementations.

In an implementation of the present disclosure, the radio access network device takes a modulus based on the terminal ID, and maps the resource in the paging group resource set according to each terminal ID. It should be noted that, taking the paging group resource as the power saving signal as an example, and in this case, the mapping relationship between the paging group information and the paging group resource is no longer determined in the form of group, but the mapping relationship between the paging group information and the paging group resource is determined in the form of a mapping relationship between the terminal ID and the power saving signal. For the radio access network device taking the modulus based on the terminal ID, reference may be made to the terminal ID modulus formula in the above background:

$$wg = floor\left(floor\left(\frac{UE\_ID}{N \times N_s}\right)/N_n\right) mod\ N_w$$

where for both idle users and inactive users, a value of T may be based on the idle parameter. For example, T=min{UE specific cycle, default cycle}, and N and Ns are determined.

In another implementation of the present disclosure, the total number of paging group information in the paging group information set may be taken a modulus according to the group ID. For example, the total number of paging group information in the paging group information set is equal to 2, and according to the result of the modulus, paging group information 0, paging group information 2, and paging group information 4 in paging group information set 1 are mapped to paging group resource No.0, and paging group information 1 and paging group information 3 in paging group information set 1 are mapped to paging group resource No. 1.

In yet another implementation of the present disclosure, the terminal may randomly select the corresponding paging group resource according to the paging group information where it is located or its own ID.

FIG. 5 illustrates a flowchart of a method for saving power according to an embodiment of the present disclosure. As shown in FIG. 5, the method for saving the power is applied in the radio access network device and include step S41.

In the step S41, an idle paging group resource set and/or an inactive paging group resource set are determined.

In embodiments of the present disclosure, the radio access network device may also establish for the terminal mapping relationships between the paging group information and the paging group resource in different Radio Resource Control (RRC) states. The following embodiments will be described by taking the paging group resource as the power saving signal as an example. In an implementation of the present disclosure, the radio access network device determines different paging group information IDs. For example, the determined paging group information is 10 groups, including ID0 to ID9. The terminal state of the idle state or the inactive state may be included in the 10 paging group information.

In another implementation of the present disclosure, the radio access network device determines different paging group information IDs. For example, the determined paging group information is 10 groups, including ID0 to ID9. It is determined that ID0 to ID5 are paging group information corresponding to the idle state of the terminal, and that ID6 to ID9 are paging group information corresponding to the inactive state of the terminal. Alternatively, it is determined that ID6 to ID9 are paging group information corresponding to the idle state of the terminal, and that ID0 to ID5 are paging group information corresponding to the inactive state of the terminal.

In yet another implementation of the present disclosure, the paging group resource, paged by the radio access network device for the idle terminal, corresponding to the paging group information is different from the paging group resource corresponding to the inactive terminal, which makes it easier to distinguish the idle terminal from the inactive terminal, and achieves the purpose of performing the transmission based on the different paging group information (for example, the power saving signal).

It should be noted that the above-mentioned embodiments regarding the number of paging group information groups and the division of the paging group information are only examples and do not specifically limit the present disclosure.

In embodiments of the present disclosure, the radio access network device configures the paging group resource set for the idle terminal and/or configures the paging group resource set for the inactive terminal. For the idle terminal or the inactive terminal, the mapping relationships between the paging group resource and the paging group information may be the same or different.

For example, a separate idle paging group resource set is configured for the idle terminal, which may include {0, 1, 2, 3, 4, 5, 6, 7, 8, 9}, that is, the idle paging group resource set includes 10 groups of paging group resources, and group IDs of the 10 groups of paging group resources are 0 to 9, respectively. A separate inactive paging group resource set is configured for the inactive terminal, which may include {0', 1', 2', 3', 4'}, that is, the inactive paging group resource set includes 10 groups of paging group resources, and group IDs of the 10 groups of paging group resources are 0' to 4', respectively.

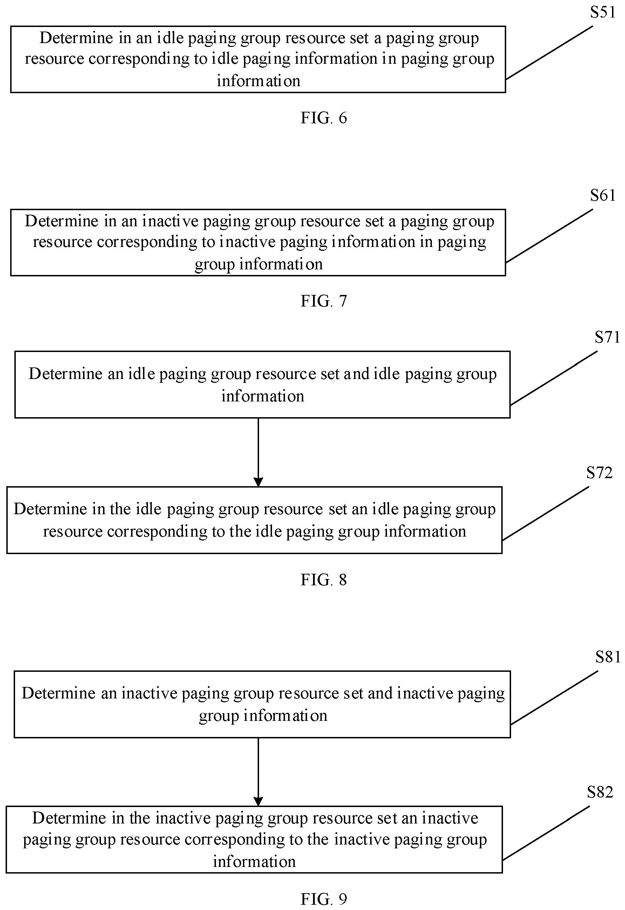

FIG. 6 illustrates a flowchart of a method for saving power according to an embodiment of the present disclosure. As shown in FIG. 6, the method for saving the power is applied in the radio access network device and includes step S51.

In the step S51, a paging group resource corresponding to idle paging information in the paging group information is determined in the idle paging group resource set.

In embodiments of the present disclosure, in response to configuring the corresponding paging group resource set for the idle terminal, the paging group resource corresponding to the idle paging information in the paging group information is determined in the idle paging group resource set.

In some embodiments of the present disclosure, taking including the 4 groups of paging group information (Group ID0 to Group ID3) and 10 groups of paging group resources (0 to 9) as an example, the corresponding paging group resource is determined for each paging group information, which includes:

Group ID0: {0, 1};
Group ID1: {2, 3, 4};
Group ID2: {5, 6, 7, 8};
Group ID3: {9}.

FIG. 7 illustrates a flowchart of a method for saving power according to an embodiment of the present disclosure. As shown in FIG. 7, the method for saving the power is applied in the radio access network device and includes step S61.

In the step S61, a paging group resource corresponding to inactive paging information in the paging group information is determined in the inactive paging group resource set.

In embodiments of the present disclosure, in response to configuring the corresponding paging group resource set for the inactive terminal, the paging group resource corresponding to the inactive paging information in the paging group information is determined in the inactive paging group resource set.

In some embodiments of the present disclosure, taking including 2 groups of paging group information (Group ID0 to Group ID1, or Group ID6 to Group ID7) and 5 groups of paging group resources (0' to 4'), the corresponding paging group resource is determined for each paging group information, a group where the paging group information is located may follow the paging group information of the idle terminal, including:

Group ID0: {0', 1'};
Group ID1: {2', 3', 4'};

FIG. 8 illustrates a flowchart of a method for saving power according to an embodiment of the present disclosure. As shown in FIG. 8, the method for saving the power is applied in the radio access network device and includes steps S71 and S72.

In the step S71, an idle paging group resource set and idle paging group information are determined.

In some embodiments of the present disclosure, a separate idle paging group resource set is configured for the idle terminal, which may include {0, 1, 2, 3, 4, 5, 6, 7, 8, 9}, that is, the idle paging group resource set includes 10 groups of paging group resources, and group IDs of the 10 groups of paging group resources are 0 to 9, respectively;

and a plurality of groups of idle paging group information are determined.

In the step S72, an idle paging group resource corresponding to the idle paging group information is determined in the idle paging group resource set.

In embodiments of the present disclosure, taking 4 groups of paging group information and 10 groups of paging group resources as an example, the idle paging group resource corresponding to the idle paging group information is determined in {0, 1, 2, 3, 4, 5, 6, 7, 8, 9}, including;

Group ID0: {0, 1};
Group ID1: {2, 3, 4};
Group ID2: {5, 6, 7, 8};
Group ID3: {9}.

Alternatively, as shown in Table 2, reference is made to Table 2. Based on the 4 groups of idle paging group information, the 4 groups of idle paging group information may be divided into 2 paging group information sets, that is, idle paging group information set 0 and idle paging group information set 1, where the idle paging group information set 0 includes {0, 1}, and the idle paging group information set 1 includes {2, 3}. The paging group resource sets corresponding to the paging group information sets are determined, respectively, which includes paging group resource set 0 and paging group resource set 1. The paging group resource set 0 (Group set0) further includes paging group resource 0 (No.0) and paging group resource 1 (No.1), and the paging group resource set 1 (Group set1) further includes paging group resource 2 (No. 2) and paging group resource 3 (No. 3).

Table 3

| 0, 1 | Group set0 | No.0 |
| | | No.1 |
| 2, 3 | Group set1 | No.2 |
| | | No.3 |

It can be understood that each element in Table 3 exists independently, and these elements are illustratively listed in the same table, but it does not mean that all elements in the table must exist at the same time as shown in the table. A value of each element does not depend on a value of any other element in Table 3. Therefore, those skilled in the art can understand that the value of each element in Table 3 is an independent embodiment.

FIG. 9 illustrates a flowchart of a method for saving power according to an embodiment of the present disclosure. As shown in FIG. 9, the method for saving the power is applied in the radio access network device and includes steps S81 and S82.

In the step S81, an inactive paging group resource set and inactive paging group information are determined.

In embodiments of the present disclosure, the radio access network device configures a separate inactive paging group resource set for the inactive terminal, which may include {0', 1', 2', 3', 4'}, that is, the inactive paging group resource set includes 10 groups of paging group resources, and group IDs of the 10 groups of paging group resources are 0' to 4', respectively; and a plurality of groups of inactive paging group information are determined.

In the step S82, an inactive paging group resource corresponding to the inactive paging group information is determined in the inactive paging group resource set.

In embodiments of the present disclosure, taking 2 groups of paging group information and 5 groups of paging group resources as an example, the inactive paging group resource corresponding to the inactive paging group information is determined in {0', 1', 2', 3', 4'}, including:

Group ID6: {0', 1'};
Group ID7: {2', 3', 4'}.

Alternatively, as shown in Table 4, reference is made to Table 4. Based on the 4 groups of inactive paging group information, the 4 groups of inactive paging group information may be divided into 2 inactive paging group information sets, that is, inactive paging group information set 0 and inactive paging group information set 1, where the inactive paging group information set 0 includes {0, 1}, and the inactive paging group information set 1 includes {2, 3}. The paging group resource sets corresponding to the inactive paging group information sets are determined, respectively, including paging group resource set 0 and paging group resource set 1. The paging group resource set 0 (Group set0) further includes paging group resource 0 (No.0) and paging group resource 1 (No.1), and the paging group resource set 1 (Group set1) also includes paging group resource 2 (No. 2) and paging group resource 3 (No. 3).

Table 4

| 0, 1 | Group set0 | No.0'<br>No.1' |
|---|---|---|
| 2, 3 | Group set1 | No.2'<br>No.3' |

It can be understood that each element in Table 1 exists independently, and these elements are illustratively listed in the same table, but it does not mean that all elements in the table must exist at the same time as shown in the table. A value of each element does not depend on a value of any other element in Table 1. Therefore, those skilled in the art can understand that the value of each element in Table 1 is an independent embodiment.

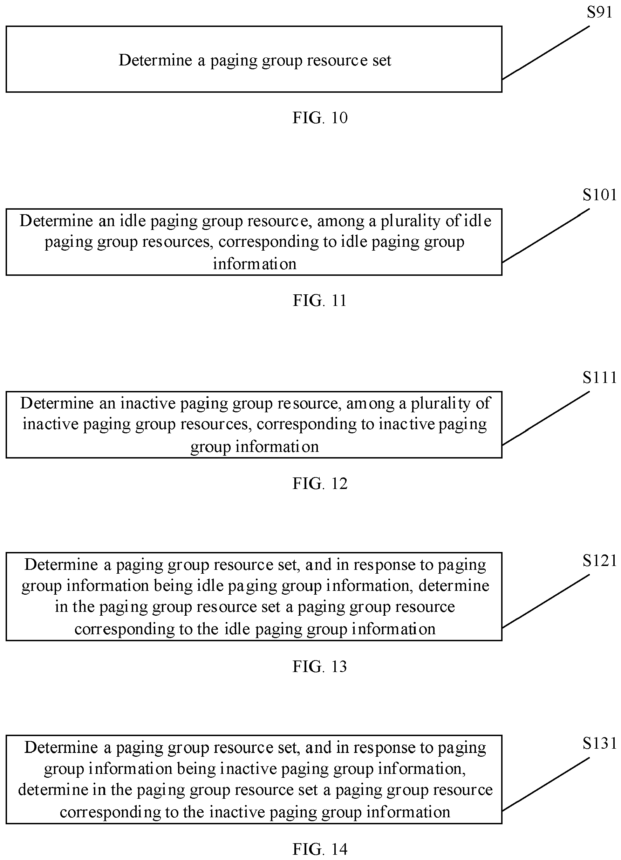

FIG. 10 illustrates a flowchart of a method for saving power according to an embodiment of the present disclosure. As shown in FIG. 10, the method for saving the power is applied in the radio access network device and includes a step S91.

In the step S91, a paging group resource set is determined.

The paging group resource set includes a plurality of idle paging group resources and/or a plurality of inactive paging group resources

In some embodiments of the present disclosure, the paging group resource common to the idle state and the inactive state is determined, and the paging group resource corresponding to the idle state is different from the paging group resource corresponding to the inactive state. For example, the paging group resource set includes 14 groups of paging group resources, which may be {0, 1, 2, 3, 4, 5, 6, 7, 8, 9, 10, 11, 12, 13, 14}, and {0, 1, 2, 3, 4, 5, 6, 7, 8, 9} in {0, 1, 2, 3, 4, 5, 6, 7, 8, 9, 10, 11, 12, 13, 14} is determined as the paging group resources corresponding to the idle state, {10, 11, 12, 13, 14} in {0, 1, 2, 3, 4, 5, 6, 7, 8, 9, 10, 11, 12, 13, 14} is determined as the paging group resources corresponding to the inactive state.

FIG. 11 illustrates a flowchart of a method for saving power according to an embodiment of the present disclosure. As shown in FIG. 11, the method for saving the power is applied in the radio access network device and includes a step S101.

In the step S101, an idle paging group resource corresponding to idle paging group information is determined among a plurality of idle paging group resources.

In some embodiments of the present disclosure, based on the paging group resource set in the above embodiments, the idle paging group resource corresponding to the idle paging group information (for example, including 4 groups of paging group information) is determined among the plurality of idle paging group resources (e.g., {0, 1, 2, 3, 4, 5, 6, 7, 8, 9}), which may include:

Group ID0: {0, 1};
Group ID1: {2, 3, 4};
Group ID2: {5, 6, 7, 8};
Group ID3: {9}.

FIG. 12 illustrates a flowchart of a method for saving power according to an embodiment of the present disclosure. As shown in FIG. 12, the method for saving the power is applied in the radio access network device and includes a step S111.

In the step S111, an inactive paging group resource corresponding to inactive paging group information is determined among a plurality of inactive paging group resources.

In some embodiments of the present disclosure, based on the paging group resource set in the above embodiments, the inactive paging group resource corresponding to the inactive paging group information (for example, including 2 groups of paging group information) is determined among the plurality of inactive paging group resources (e.g., {10, 11, 12, 13, 14}), which may include:

Group ID0: {10, 11};
Group ID1: {12, 13, 14};
or:
Group ID 6: {10, 11};
Group ID 7: {12, 13, 14}.

In some embodiments of the present disclosure, a paging group resource set common to the idle state and the inactive state may be determined, which, for example, includes {0, 1, 2, 3, 4, 5, 6, 7, 8, 9}, and both the idle terminal and the inactive terminal can use this paging group resource set.

FIG. 13 illustrates a flowchart of a method for saving power according to an embodiment of the present disclosure. As shown in FIG. 13, the method for saving the power is applied in the radio access network device and includes a step S121.

In the step S121, a paging group resource set is determined, and in response to the paging group information being idle paging group information, a paging group resource corresponding to the idle paging group information is determined in the paging group resource set.

In some embodiments of the present disclosure, the paging group resource corresponding to the idle paging group information (including 4 groups) is determined in the paging group resource set (e.g., {0, 1, 2, 3, 4, 5, 6, 7, 8, 9}), which may include:

Group0: {0, 1};
Group ID1: {2, 3, 4};
Group ID2: {5, 6, 7, 8};
Group ID3: {9}.

FIG. 14 illustrates a flowchart of a method for saving power according to an embodiment of the present disclosure. As shown in FIG. 14, the method for saving the power is applied in the radio access network device and includes a step S131.

In the step S131, a paging group resource set is determined, and in response to the paging group information being inactive paging group information, a paging group resource corresponding to the inactive paging group information is determined in the paging group resource set.

In some embodiments of the present disclosure, the paging group resource corresponding to the inactive paging group information (including 3 groups) is determined in the paging group resource set (e.g., {0, 1, 2, 3, 4, 5, 6, 7, 8, 9}), which may include:

Group0: {2};
Group ID1: {5, 6, 7};
Group ID2: {8, 9}.

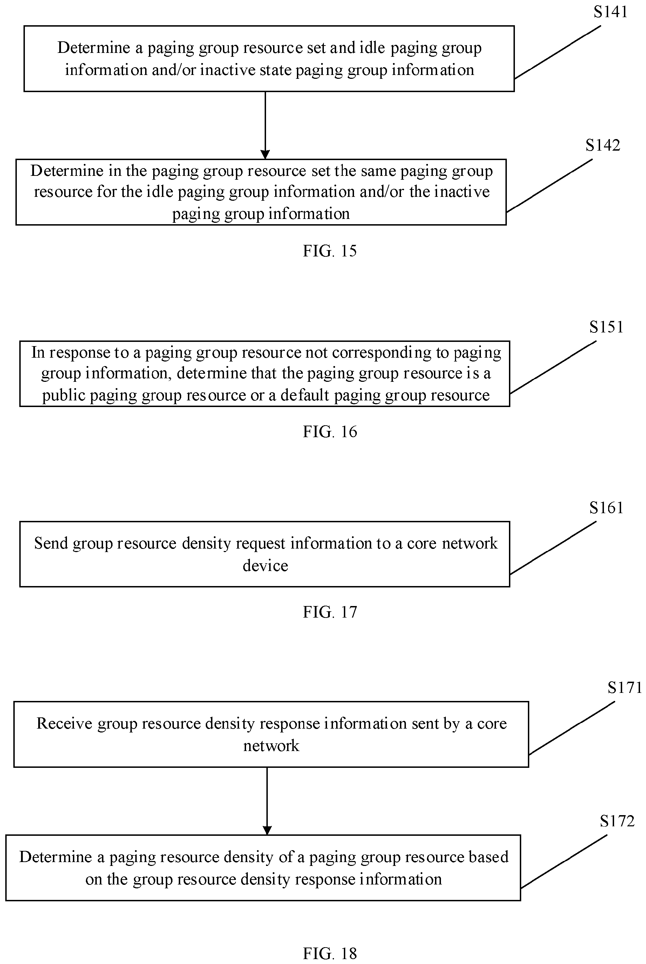

FIG. 15 illustrates a flowchart of a method for saving power according to an embodiment of the present disclosure. As shown in FIG. 15, the method for saving the power is applied in the radio access network device and includes steps S141 and S142.

In the step S141, a paging group resource set and idle paging group information and/or inactive state paging group information are determined.

In some embodiments of the present disclosure, a paging group resource set common to the idle state and the inactive state may be determined, which, for example, includes {0, 1, 2, 3, 4, 5, 6, 7, 8, 9}, and both the idle terminal and the inactive terminal can use this paging group resource set; and the idle paging group information and/or the inactive state paging group information are determined.

In the step S142, the same paging group resource is determined in the paging group resource set for the idle paging group information and/or the inactive paging group information.

In some embodiments of the present disclosure, the same mapping relationship between the paging group information and the paging group resource may be determined for two states of the terminal, that is the idle state and the inactive state. In this case, spaces of the group IDs allocated to the two states are reused. For example, group ID1 may be allocated to an idle terminal, and group ID1 is also allocated to an inactive terminal. For example,

Idle Group ID0: {0, 1}     <-> Inactive Group ID0
Idle Group ID1: {2, 3, 4}     <-> Inactive Group ID1
Idle Group ID2: {4, 6, 7, 8}     <-> Inactive Group ID2
Idle Group ID3: {9}     <-> Inactive Group ID3

FIG. 16 illustrates a flowchart of a method for saving power according to an embodiment of the present disclosure. As shown in FIG. 16, the method for saving the power is applied in the radio access network device and includes a step S151.

In the step S151, in response to the paging group resource not corresponding to the paging group information, it is determined that the paging group resource is a public paging group resource or a default paging group resource

In embodiments of the present disclosure, corresponding paging group information may not be configured for some paging group resources. In a manner, the paging group resource without being configured with the corresponding paging group information may be used as the public paging group resource. In another manner, the paging group resource without being configured with the corresponding paging group information may be used as the default paging group resource.

In embodiments of the present disclosure, for the idle terminal or the inactive terminal, if the paging group information where the terminal is located is not determined, it may be determined that the paging group information where the terminal is located is abnormal based on the following several situations.

(1) a capability of the terminal does not support the paging group;
(2) the radio access network device does not provide the paging group information to the terminal;
(3) a capability of the radio access network device capability does not support the paging group.

In some embodiments of the present disclosure, the default paging group resource or the public paging group resource may be determined based on the indication of the radio access network device, and the indication may be a communication protocol or predetermined, for example, paging group resource 9 is specified as the default paging group resource based on the communication protocol, or paging group resource 9 is predetermined as the default paging group resource.

The default paging group resource may also be a default paging group resource set. The default paging group resource set may be a paging group resource set specified by the communication protocol or a predetermined paging group resource set, such as an index of the maximum allowed idle paging group resource set. Reference may be made to Group set1 in Table 5, as shown in Table 5.

Table 5

| 0, 1, 2, 3, 4 | Group set0 | No.0 No.1 |
|---|---|---|
| 5, 6, 7, 8, 9 | Group set1 | No.2 No.3 |

It can be understood that each element in Table 5 exists independently, and these elements are illustratively listed in the same table, but it does not mean that all elements in the table must exist at the same time as shown in the table. A value of each element does not depend on a value of any other element in Table 5. Therefore, those skilled in the art can understand that the value of each element in Table 5 is an independent embodiment.

Resources among the public paging group resources are not grouped and may take effect on all terminals.

FIG. 17 illustrates a flowchart of a method for saving power according to an embodiment of the present disclosure. As shown in FIG. 17, the method for saving the power is applied in the radio access network device and includes a step S161.

In the step S161, group resource density request information is sent to a core network device.

The request information is configured to request a paging resource density of the paging group resource from the core network.

In embodiments of the present disclosure, assistance information may be transferred between the radio access network device and the core network device. The assistance information may be used by the core network to allocate the paging group resource to the radio access network resource, or to establish for the radio access network device a reference value for the mapping relationship between the paging group resource and the paging group information. For convenience of description, the present disclosure the transferred assistance information is referred to as the group resource density request information and group resource density response information.

In some embodiments of the present disclosure, the radio access network device expects the paging group information allocated by the core network device for it, such as the expected paging group range.

In some embodiments of the present disclosure, the radio access network device expects the core network device to allocate the group resource density request information to it.

FIG. 18 illustrates a flowchart of a method for saving power according to an embodiment of the present disclosure. As shown in FIG. 18, the method for saving the power is applied in the radio access network device and includes steps S171 and S 172.

In the step S171, group resource density response information sent by a core network is received.

The group resource density response information is configured to indicate the paging resource density of the paging group resource.

In some embodiments of the present disclosure, the core network indicates, based on the group resource density response information, the paging resource density of each paging group resource allocated to the radio access network device. For example, a scaling factor for mapping the paging group information to the paging group resource is determined for the radio access network device. The smaller the scaling factor, the fewer paging resources are required.

In some embodiments of the present disclosure, for example, a scaling factor corresponding to group ID1 is 1, and a scaling factor corresponding to group3 is 2, then group2 needs to be mapped to 2 times the paging resources, because group2 may be intensive paging, more paging resources (e.g., the power saving signal) are required for mapping.

In the step S 172, based on the group resource density response information, the paging resource density of the paging group resource is determined.

In embodiments of the present disclosure, the radio access network device further determines the paging resource density of each paging group resource based on the determined group resource density response information.

It should be noted that the assistance information may be notified to the core network device upon the establishment of the cell. For example, for the NR system, when the NG interface is established, the base station interacts with the core network device through the NG SETUP request/response message.

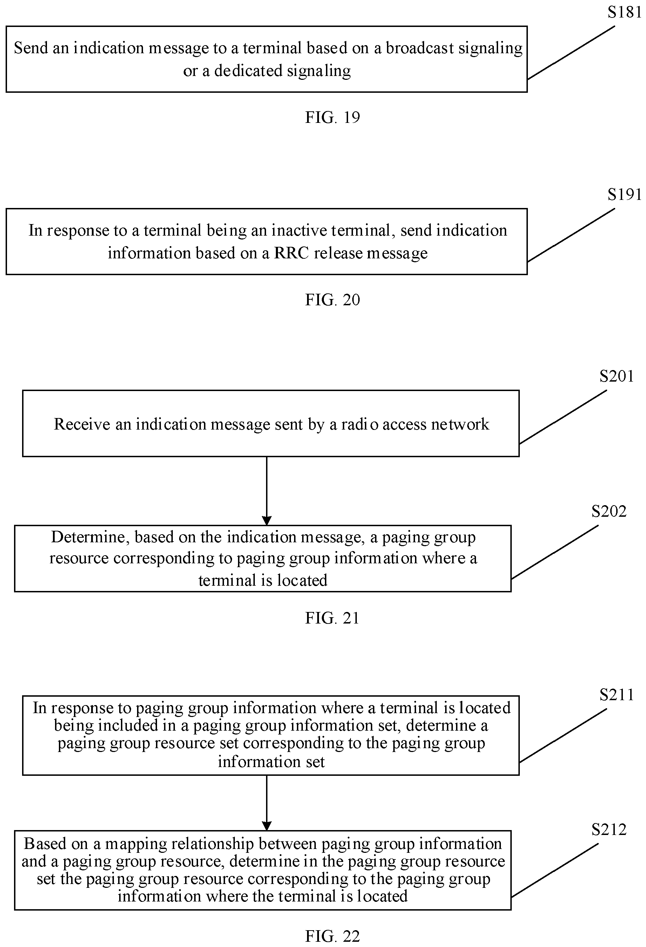

FIG. 19 illustrates a flowchart of a method for saving power according to an embodiment of the present disclosure. As shown in FIG. 19, the method for saving the power is applied in the radio access network device and includes a step S181.

In the step S181, an indication message is sent to the terminal based on a broadcast signaling or a dedicated signaling.

In embodiments of the present disclosure, the radio access network device may send, based on the broadcast signaling or the dedicated signaling, the mapping relationship between the paging group information and the paging group resource to the terminal.

FIG. 20 illustrates a flowchart of a method for saving power according to an embodiment of the present disclosure. As shown in FIG. 20, the method for saving the power is applied in the radio access network device and includes a step S191.

In the step S191, in response to the terminal being an inactive terminal, indication information is sent based on a RRC release message.

In some embodiments of the present disclosure, in response to the terminal state being the inactive state, the mapping relationship between the paging group information and the paging group resource is sent to the terminal based on the RRC release message.

In embodiments of the present disclosure, the above embodiments may be implemented alone or in combination with different embodiments.

Based on the same/similar concept, embodiments of the present disclosure further provide a method for saving power.

FIG. 21 illustrates a flowchart of a method for saving power according to an embodiment of the present disclosure. As shown in FIG. 21, the method for saving the power is applied in a terminal and includes steps S201 and S202.

In the step S201, an indication message sent by a radio access network is received.

The indication information is configured to indicate a mapping relationship, and the mapping relationship is a mapping relationship between paging group information and a paging group resource.

In the step S202, based on the indication message, a paging group resource corresponding to paging group information where the terminal is located is determined.

In embodiments of the present disclosure, the terminal receives the indication message sent by the radio access network, and determines the mapping relationship between the paging group information and the paging group resource.

In some embodiments of the present disclosure, the paging group resource may be configured for the PO. The paging group resource may be a power saving signal (for example, the WUS). For example, different paging group information is indicated based on power saving signals in different time-frequency domains. The paging group resource may also be a reserved bit in the paging DCI. For example, paging group information corresponding to different paging group resources is respectively indicated based on bit1 to bit5.

Through the method for saving the power provided by the present disclosure, the radio access network device can establish for the terminal the mapping relationship between the paging group information and the paging group resource, so that the terminal monitors the paging message in the corresponding paging group resource, avoiding the false paging wake up and achieving the effect of power saving.

In embodiments of the present disclosure, the radio access network device configures the paging group resource. The paging group resource as the power saving signal is taken as an example.

In some embodiments of the present disclosure, the radio access network device configures a power saving signal resource set for the terminal. For example, the power saving signal resource set includes 10 paging group resources, which may be {0, 1, 2, 3, 4, 5, 6, 7, 8, 9}. It should be understood that each paging group resource included in the power saving signal resource set includes a plurality of power saving signals.

The determining in the paging resource set the paging group resource corresponding to the paging group information may be that one paging group information corresponds to one paging group resource, or one paging group information corresponds to a plurality of paging group resources, or a plurality of paging group information corresponds to one paging group resource, which is not specifically limited by the present disclosure.

In embodiments of the present disclosure, the radio access network device establishes, based on the paging group information of the terminal, for each paging group information the mapping relationship from the paging group information to the paging group resource. The paging group information may also be divided through the paging probability, the paging probability level, or the terminal paging level. That is, a certain probability range belongs to a group, etc.

In some embodiments of the present disclosure, taking the paging group resource as the power saving signal as an example, the power saving signal resource set includes 10 paging group resources, including {0, 1, 2, 3, 4, 5, 6, 7, 8, 9}. An enumeration manner may be used to establish the corresponding paging group resource for each paging group information.

For example, for each paging group information, a power saving signal resource corresponding to the paging group information is directly given in the enumeration manner. Taking grouping ID as an example, the paging group information of the terminal includes 4 groups, which may be Group ID0, Group ID1, Group ID2, and Group ID3. The paging group resource corresponding to each paging group information may be given as the following mapping relationship:

Group ID0: {0, 1};
Group ID1: {2, 3, 4};
Group ID2: {4, 6, 7, 8};
Group ID3: {9}.

In some embodiments of the present disclosure, taking the paging group resource as the power saving signal as an example, the power saving signal resource set includes 10 paging group resources, including {0, 1, 2, 3, 4, 5, 6, 7, 8, 9}. A bitmap manner may be used to establish a corresponding paging group resource for each paging group information.

For example, for each paging group information, the power saving signal resource corresponding to the paging group information is directly given in the bitmap manner. Taking grouping ID as an example, the paging group information of the terminal includes 4 groups, which may be Group ID0, Group ID1, Group ID2, and Group ID3. The paging grouping resource corresponding to each paging group information may be given as the following mapping relationship:

Group ID0: 1100000000;
Group ID1: 0011100000;
Group ID2: 0000011110;
Group ID3: 0000000001.

In some embodiments of the present disclosure, taking the paging group resource as the power saving signal as an example, the power saving signal resource set includes 10 paging group resources, including {0, 1, 2, 3, 4, 5, 6, 7, 8, 9}. An upper-lower boundary manner may be used to establish the corresponding paging group resource for each paging group information.

For example, for each paging group information, the power saving signal resource corresponding to the paging group information is directly given in the upper-lower boundary manner. Taking the grouping ID as an example, the paging group information of the terminal includes 4 groups, which may be Group ID0, Group ID1, Group ID2, and Group ID3. The paging grouping resource corresponding to each paging group information may be given as the following mapping relationship:

Group ID0: 1, it is determined that the upper boundary is 1 and the lower boundary is a default value 0. When threshold 1 is 1, both paging group resource 0 and paging group resource 1 below 1 belong to the paging group resource corresponding to the paging group information.

Group ID1: 4, it is determined that the upper boundary is 4 and the lower boundary is a default value 2. When threshold 2 is 4, paging group resource 2, paging group resource 3 and paging group resource 4 below 4 all belong to the paging group resource corresponding to the paging group information.

Group ID2: 8, it is determined that the upper boundary is 8 and the lower boundary is a default value 5. When threshold 3 is 8, paging group resource 5, paging group resource 6, paging group resource 7 and paging group resource 8 below 8 all belong to the paging group resource corresponding to the paging group information.

Group ID3: 9, and paging group resources above 9 belong to the paging group resource corresponding to the paging group information.

In some embodiments of the present disclosure, taking the paging group resource as the power saving signal as an example, the power saving signal resource set includes 10 paging group resources, including {0, 1, 2, 3, 4, 5, 6, 7, 8, 9}. A calculation manner may also be used to establish the corresponding paging group resource for each paging group information.

For example, for each paging group information, the power saving signal resource corresponding to the paging group information is directly given in the calculation manner. For example, based on the number of paging group information, resources in the paging group resource set are evenly allocated. Taking the paging group information of the terminal including 4 groups as an example, the 10 paging group resources are evenly allocated to the 4 paging group information. Each paging resource information group corresponds to two paging group resources, and the remaining paging group resources can correspond to any paging group information.

In embodiments of the present disclosure, the terminal determines that its own information is included in the paging group information, and determines, based on the mapping relationship between the paging group information and the paging group resource, the paging group resource corresponding to the paging group information where the terminal is located.

In response to the terminal being included in the paging group information, based on the mapping relationship between the paging group information and the paging group resource, the paging group resource corresponding to the paging group information where the terminal is located is determined.

In an implementation of the present disclosure, the radio access network device takes a modulus based on the terminal ID, and maps the resource in the paging group resource set according to each terminal ID. It should be noted that, taking the paging group resource as the power saving signal as an example, and in this case, the mapping relationship between the paging group information and the paging group resource is no longer determined in the form of group, but the mapping relationship between the paging group information and the paging group resource is determined in the form of a mapping relationship between the terminal ID and the power saving signal. For the radio access network device taking the modulus based on the terminal ID, reference may be made to the terminal ID modulus formula in the above background:

$$wg = floor\left(floor\left(\frac{UE\_ID}{N \times N_s}\right)/N_n\right) \; mod \; N_w$$

where for both idle users and inactive users, a value of T may be based on the idle parameter. For example, T=min{UE specific cycle, default cycle}, and N and Ns are determined.

In an implementation of the present disclosure, based on the above embodiments, in a case that one or more paging group resources are determined for each paging group information, or in a case that a paging group information set is constructed, and a paging group resource set is determined for the paging group information set, the terminal may determine the paging resource corresponding to the terminal based on the terminal ID modulus manner. Further, the total number of paging group information in the paging group information set may be taken a modulus according to the group ID. For example, if the total number of paging group information in the paging group information set is 2, then the paging resource corresponding to the terminal is determined according to the result of the modulus. If the paging resource is the power saving signal, the power saving signal corresponding to the terminal ID modulus is determined.

FIG. 22 illustrates a flowchart of a method for saving power according to an embodiment of the present disclosure. As shown in FIG. 22, the method for saving the power is applied in the terminal and includes steps S211 and S212.

In the step S211, in response to the paging group information where the terminal is located being included in the paging group information set, a paging group resource set corresponding to the paging group information set is determined.

In embodiments of the present disclosure, the paging group information set includes one or more paging group information. The radio access network device may compose one or more paging group information into one paging group information set, thereby determining the plurality of paging group information sets. If the paging group information where the terminal is located is included in the paging group information set, the paging group resource set corresponding to the paging group information set is determined. An advantage of this manner is that the network does not need to configure the resources corresponding to each group one by one, which saves signaling overhead and group resource overhead.

In the step S212, based on the mapping relationship between the paging group information and the paging group resource, the paging group resource corresponding to the paging group information where the terminal is located is determined in the paging group resource set.

In embodiments of the present disclosure, the radio access network device establishes a correspondence between the paging group information set and the paging group resource set, and determines, based on the established correspondence, the mapping relationship between each paging group information in the paging group information set

and the paging group resource in the corresponding paging group resource set. Based on the mapping relationship between the paging group information and the paging group resource, the terminal determines in the paging group resource set the paging group resource corresponding to the paging group information where the terminal is located.

In some embodiments of the present disclosure, the radio access network device may also establish for the terminal mapping relationships between the paging group information and the paging group resource in different RRC states. The following embodiments will be described by taking the paging group resource as the power saving signal as an example.

In an implementation of the present disclosure, the radio access network device determines different paging group information IDs. For example, the determined paging group information is 10 groups, including ID0 to ID9. The terminal state of the idle state or the inactive state may be included in the 10 groups of the paging group information.

In another implementation of the present disclosure, the radio access network device determines different paging group information IDs. For example, the determined paging group information is 10 groups, including ID0 to ID9. It is determined that ID0 to ID5 are paging group information corresponding to the idle state of the terminal, and that ID6 to ID9 are paging group information corresponding to the inactive state of the terminal. Alternatively, it is determined that ID6 to ID9 are paging group information corresponding to the idle state of the terminal, and that ID0 to ID5 are paging group information corresponding to the inactive state of the terminal.

In yet another implementation of the present disclosure, the paging group resource, paged by the radio access network device for the idle terminal, corresponding to the paging group information is different from the paging group resource corresponding to the inactive terminal, which makes it easier to distinguish the idle terminal from the inactive terminal, and achieves the purpose of performing the transmission based on the different paging group information (for example, the power saving signal).

It should be noted that the above-mentioned embodiments regarding the number of paging group information groups and the division of the paging group information are only examples and do not specifically limit the present disclosure.

The terminal, based on its own state, determines in the idle paging group resource set the paging group resource corresponding to the paging group information where the terminal is located. Alternatively, in response to the terminal being in the inactive state, the paging group resource corresponding to the paging group information where the terminal is located is determined in the inactive paging group resource set.

In embodiments of the present disclosure, the radio access network device configures separate paging group resource sets for the idle terminal and the inactive terminal. For the idle terminal or the inactive terminal, the mapping relationships between the paging group resource and the paging group information may be the same or different.

For example, a separate idle paging group resource set is configured for the idle terminal, which may include {0, 1, 2, 3, 4, 5, 6, 7, 8, 9}, that is, the idle paging group resource set includes 10 groups of paging group resources, and group IDs of the 10 groups of paging group resources are 0 to 9, respectively. A separate inactive paging group resource set is configured for the inactive terminal, which may include {0', 1', 2', 3', 4'}, that is, the inactive paging group resource set includes 10 groups of paging group resources, and group IDs of the 10 groups of paging group resources are 0' to 4', respectively.

In response to the terminal being in the idle state, the paging group resource corresponding to the paging group information where the terminal is located is determined among the plurality of idle paging group resources included in the paging group resource set. Alternatively, in response to the terminal being in the inactive state, the paging group resource corresponding to the paging group information where the terminal is located is determined among the plurality of inactive paging group resources included in the paging group resource set.

In embodiments of the present disclosure, in response to configuring the corresponding paging group resource set for the idle terminal, the paging group resource corresponding to the idle paging information in the paging group information is determined in the idle paging group resource set. In embodiments of the present disclosure, in response to configuring the corresponding paging group resource set for the inactive terminal, the paging group resource corresponding to the inactive paging information in the paging group information is determined in the inactive paging group resource set.

In some embodiments of the present disclosure, a separate idle paging group resource set is configured for the idle terminal, which may include {0, 1, 2, 3, 4, 5, 6, 7, 8, 9}, that is, the idle paging group resource set includes 10 groups of paging group resources, and group IDs of the 10 groups of paging group resources are 0 to 9, respectively; and a plurality of groups of idle paging group information are determined. The radio access network device configures a separate inactive paging group resource set for the inactive terminal, which may include {0', 1', 2', 3', 4'}, that is, the inactive paging group resource set includes 10 groups of paging group resources, and group IDs of the 10 groups of paging group resources are 0' to 4', respectively; and a plurality of groups of inactive paging group information are determined.

In some embodiments of the present disclosure, a paging group resource set common to the idle state and the inactive state may be determined, which, for example, includes {0, 1, 2, 3, 4, 5, 6, 7, 8, 9}, and both the idle terminal and the inactive terminal can use this paging group resource set; and the idle paging group information and/or the inactive state paging group information are determined. The same mapping relationship between the paging group information and the paging group resource may be determined for two states of the terminal, that is the idle state and the inactive state.

As an embodiment, spaces of the group IDs allocated to the two states are reused. For example, group ID1 may be allocated to an idle terminal, and group ID1 is also allocated to an inactive terminal, and in this case, the distinguishment is made through the different states. For example, the group ID of the idle terminal is allocated by the core network, but the base station may not allocate the group ID to the inactive terminal, but the group ID of the idle terminal is directly used, which can achieve an effect that the paging group resource of the inactive terminal and the paging group resource of the idle terminal are different.

In response to the terminal being in the idle state, the paging group resource corresponding to the paging group information where the terminal is located is determined in the paging group resource set. Alternatively, in response to the terminal being in the inactive state, the paging group resource corresponding to the paging group information where the terminal is located is determined in the paging group resource set.

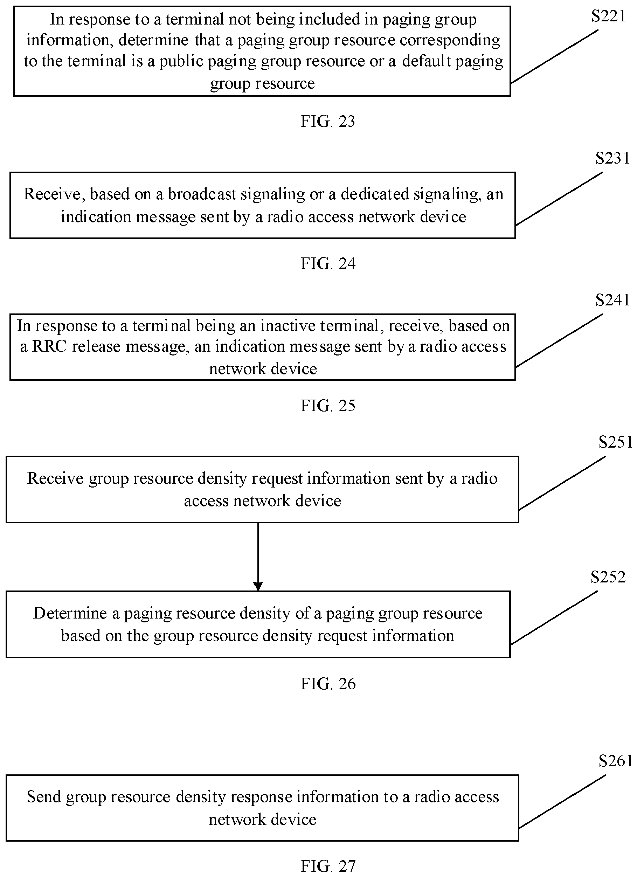

FIG. 23 illustrates a flowchart of a method for saving power according to an embodiment of the present disclosure. As shown in FIG. 23, the method for saving the power is applied in the terminal and includes a step 221.

In the step S221, in response to the terminal not being included in the paging group information, it is determined that a paging group resource corresponding to the terminal is a public paging group resource or a default paging group resource.

In embodiments of the present disclosure, for the idle terminal or the inactive terminal, if the paging group information where the terminal is located is not determined, it may be determined that the paging group information where the terminal is located is abnormal based on the following several situations.

(1) a capability of the terminal does not support the paging group;
(2) the radio access network device does not provide the paging group information to the terminal;
(3) a capability of the radio access network device capability does not support the paging group.

In response to the terminal not being included in the paging group information, the public paging group resource or the default paging group resource is determined, and the corresponding paging resource is determined among the public paging group resource or the default paging group resource.

In an implementation of the present disclosure, if a reason that the terminal is not included in the paging group information is that the radio access network device does not provide the terminal with the paging group information, the terminal may also select the default paging group resource. The determination of the default paging group resource by the terminal may be based on the indication from the radio access network device, and the indication may be a communication protocol or predetermined, for example, paging group resource 9 is specified as the default paging group resource based on the communication protocol, or paging group resource 9 is predetermined as the default paging group resource.

The default paging group resource may also be a default paging group resource set. The default paging group resource set may be a paging group resource set specified by the communication protocol or a predetermined paging group resource set, such as an index of the maximum allowed idle paging group resource set, that is, Group setl. Reference may be made to Table 6, as shown in Table 6.

Table 6

| | | |
|---|---|---|
| 0, 1, 2, 3, 4 | Group set0 | No.0 No.1 |
| 5, 6, 7, 8, 9 | Group set1 | No.2 No.3 |

It can be understood that each element in Table 6 exists independently, and these elements are illustratively listed in the same table, but it does not mean that all elements in the table must exist at the same time as shown in the table. A value of each element does not depend on a value of any other element in Table 6. Therefore, those skilled in the art can understand that the value of each element in Table 6 is an independent embodiment.

In another implementation of the present disclosure, if the reason that the terminal is not included in the paging group information is that the terminal does not support the paging group, the radio access network device does not provide the terminal with the paging group information or the capability of the radio access network device does not support the paging group, the terminal may also select the public paging group resource, which is determined by the terminal. Resources among the public paging group resources are not grouped and may take effect on all terminals.

FIG. 24 illustrates a flowchart of a method for saving power according to an embodiment of the present disclosure. As shown in FIG. 24, the method for saving the power is applied in the terminal and includes a step S231.

In the step S231, an indication message sent by the radio access network device is received based on a broadcast signaling or a dedicated signaling.

In embodiments of the present disclosure, the terminal may determine the mapping relationship between the paging group information and the paging group resource based on the broadcast signaling or the dedicated signaling.

As an embodiment, if the base station does not notify the terminal of the paging group information or the mapping relationship between the paging group information and the paging group resource, it implicitly expresses that the base station does not support the paging group function.

FIG. 25 illustrates a flowchart of a method for saving power according to an embodiment of the present disclosure. As shown in FIG. 25, the method for saving the power is applied in the terminal and includes a step S241.

In the step S241, in response to the terminal being an inactive terminal, an indication message sent by the radio access network device is received based on a RRC release message.

In embodiments of the present disclosure, in response to the terminal being the inactive terminal, the mapping relationship between the paging group information and the paging group resource is determined based on the RRC release message.

Based on the same/similar concept, embodiments of the present disclosure further provide a method for saving power.

FIG. 26 illustrates a flowchart of a method for saving power according to an embodiment of the present disclosure. As shown in FIG. 26, the method for saving the power is applied in a core network device and includes steps S251 and S252.

In the step S251, group resource density request information sent by a radio access network device is received.

The group resource density request information is configured to request a paging resource density of a paging group resource from the core network.

In embodiments of the present disclosure, assistance information may be transferred between the radio access network device and the core network device. The assistance information may be used by the core network to allocate the paging group resource to the radio access network resource, or to establish for the radio access network device a reference value for the mapping relationship between the paging group resource and the paging group information. For convenience of description, the present disclosure the transferred assistance information is referred to as the group resource density request information and group resource density response information.

In the step S252, the paging resource density of the paging group resource is determined based on the group resource density request information.

In some embodiments of the present disclosure, the core network indicates, based on the group resource density response information, the paging resource density of each paging group resource allocated to the radio access network device. For example, a scaling factor for mapping the paging group information to the paging group resource is determined for the radio access network device. The smaller the scaling factor, the fewer paging resources are required.

In some embodiments of the present disclosure, for example, a scaling factor corresponding to group ID1 is 1, and a scaling factor corresponding to group3 is 2, then group2 needs to be mapped to 2 times the paging resources, because group2 may be intensive paging, more paging resources (e.g., the power saving signal) are required for mapping.

It should be noted that the assistance information may be notified to the core network device upon the establishment of the cell. For example, for the NR system, when the NG interface is established, the base station interacts with the core network device through the NG SETUP request/response message.

FIG. 27 illustrates a flowchart of a method for saving power according to an embodiment of the present disclosure. As shown in FIG. 27, the method for saving the power is applied in the core network device and includes a step S261.

In the step S261, group resource density response information is sent to the radio access network device.

The group resource density response information is configured to indicate the paging resource density of the paging group resource.

Based on the same concept, embodiments of the present disclosure further provide an apparatus for saving power.

It can be understood that, in order to implement the above-mentioned functions, the apparatus for saving the power provided by embodiments of the present disclosure includes corresponding hardware structures and/or software modules for executing respective functions. In combination with units and algorithm steps of various examples disclosed in embodiments of the present disclosure, embodiments of the present disclosure may be implemented by in a form of hardware or a combination of the hardware and computer software. Whether a certain function is implemented in the fashion of hardware or in the fashion that the computer software drives the hardware depends on a particular application and design constraints of the technical solution. A person skilled in the art may implement the described functions with different methods for each particular application, but such an implementation shall not be regarded as going beyond the scope of the technical solution according to embodiments of the present disclosure.

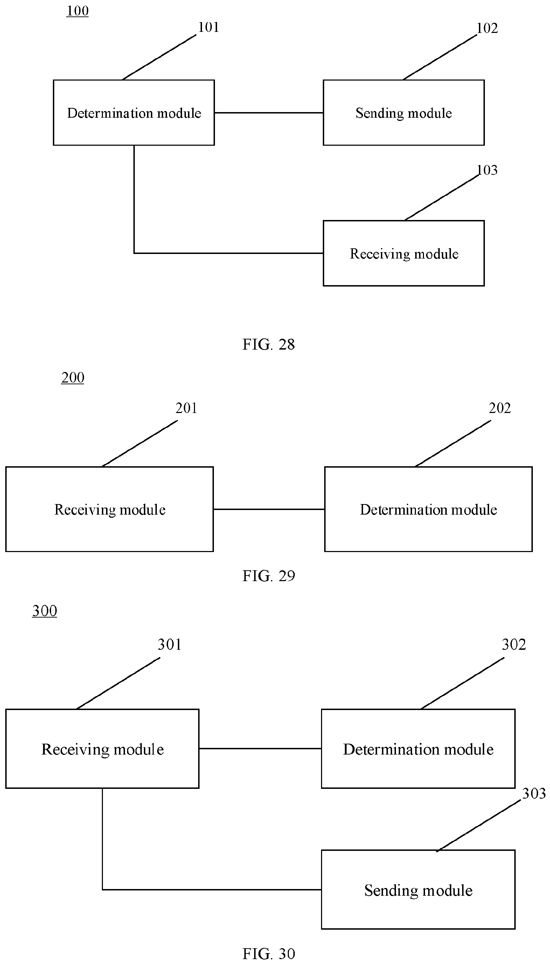

FIG. 28 illustrates a block diagram of an apparatus for saving power according to an embodiment of the present disclosure. Referring to FIG. 28, the apparatus for saving the power 100 is applied to a radio access network device and includes a determination module 101 and a sending module 102.

The determination module 101 is configured to determine a mapping relationship between paging group information and a paging group resource. The sending module 102 is configured to send indication information to a terminal, and the indication information is configured to indicate the mapping relationship.

In embodiments of the present disclosure, the determination module 101 is configured to determine a paging group resource set, and determine in the paging resource set, based on the paging group information, the paging group resource corresponding to the paging group information.

In embodiments of the present disclosure, the determination module 101 is configured to determine a plurality of paging group information sets including one or more paging group information; determine a paging group resource set corresponding to the paging group information set, and the paging group resource set includes one or more paging group resources; and determine, based on the paging group resource set corresponding to the paging group information set, a mapping relationship between each paging group information and a paging group resource.

In embodiments of the present disclosure, the determination module 101 is configured to determine an idle paging group resource set and/or an inactive paging group resource set; determine in the idle paging group resource set a paging group resource corresponding to idle paging information in the paging group information; and/or, determine in the inactive paging group resource set a paging group resource corresponding to inactive paging information in the paging group information.

In embodiments of the present disclosure, the determination module 101 is configured to determine an idle paging group resource set and idle paging group information; and determine in the idle paging group resource set an idle paging group resource corresponding to the idle paging group information.

In embodiments of the present disclosure, the determination module 101 is configured to determine an inactive paging group resource set and inactive paging group information; and determine in the inactive paging group resource set an inactive paging group resource corresponding to the inactive paging group information.

In embodiments of the present disclosure, the determination module 101 is configured to determine a paging group resource set, and the paging group resource set includes a plurality of idle paging group resources and/or a plurality of inactive paging group resources; determine an idle paging group resource, among the plurality of idle paging group resources, corresponding to idle paging group information; and/or determine an inactive paging group resource, among the plurality of inactive paging group resources, corresponding to inactive paging group information.

In embodiments of the present disclosure, the determination module 101 is configured to determine a paging group resource set, and in response to the paging group information being idle paging group information, determining in the paging group resource set a paging group resource corresponding to the idle paging group information; or, determine the paging group resource set, and in response to the paging group information being inactive paging group information, determine in the paging group resource set a paging group resource corresponding to the inactive paging group information.

In embodiments of the present disclosure, the determination module 101 is configured to determine a paging group resource set and idle paging group information and/or inactive state paging group information; and determine in the paging group resource set the same paging group resource for the idle paging group information and/or the inactive paging group information.

In embodiments of the present disclosure, the determination module 101 is further configured to, in response to the paging group resource not corresponding to the paging group information, determine that the paging group resource is a public paging group resource or a default paging group resource.

In embodiments of the present disclosure, the sending module 102 is further configured to send group resource density request information to a core network device, and the request information is configured to request a paging resource density of the paging group resource from the core network.

In embodiments of the present disclosure, the apparatus further includes: a receiving module 103.

The receiving module 103 is configured to receive group resource density response information sent by the core network, and the group resource density response information is configured to indicate the paging resource density of the paging group resource. The determination module is configured to determine the paging resource density of the paging group resource based on the group resource density response information.

In embodiments of the present disclosure, the sending module 102 is configured to send the indication message to the terminal based on a broadcast signaling or a dedicated signaling.

In embodiments of the present disclosure, the sending module 102 is configured to send the indication information based on a Radio Resource Control (RRC) release message in response to the terminal being an inactive terminal.

FIG. 29 illustrates a block diagram of an apparatus for saving power according to an embodiment of the present disclosure. Referring to FIG. 29, the apparatus for saving the power 200 is applied to a terminal and includes a receiving module 201 and a determination module 202.

The receiving module 201 is configured to receive an indication message sent by a radio access network, and the indication information is configured to indicate a mapping relationship, and the mapping relationship is a mapping relationship between paging group information and a paging group resource. The determination module 202 is configured to determine, based on the indication message, a paging group resource corresponding to paging group information where the terminal is located.

In embodiments of the present disclosure, the determination module 202 is configured to, in response to the terminal being included in the paging group information, determine, based on the mapping relationship between the paging group information and the paging group resource, the paging group resource corresponding to the paging group information where the terminal is located.

In embodiments of the present disclosure, a paging group information group set includes one or more paging group information.

The determination module 202 is configured to, in response to the paging group information where the terminal is located being included in the paging group information set, determine a paging group resource set corresponding to the paging group information set; and based on the mapping relationship between the paging group information and the paging group resource, determine in the paging group resource set the paging group resource corresponding to the paging group information where the terminal is located.

In embodiments of the present disclosure, the determination module 202 is configured to, in response to the terminal being in an idle state, determine in an idle paging group resource set the paging group resource corresponding to the paging group information where the terminal is located; or in response to the terminal being in an inactive state, determine in an inactive paging group resource set the paging group resource corresponding to the paging group information where the terminal is located.

In embodiments of the present disclosure, a paging group resource set includes a plurality of idle paging group resources and a plurality of inactive paging group resources.

The determination module 202 is configured to, in response to the terminal being in an idle state, determine the paging group resource, among the plurality of idle paging group resources included in the paging group resource set, corresponding to the paging group information where the terminal is located; or in response to the terminal being in an inactive state, determine the paging group resource, among the plurality of inactive paging group resources included in the paging group resource set, corresponding to the paging group information where the terminal is located.

In embodiments of the present disclosure, the determination module 202 is configured to, in response to the terminal being in an idle state, determine in a paging group resource set the paging group resource corresponding to the paging group information where the terminal is located; or, in response to the terminal being in an inactive state, determine in the paging group resource set the paging group resource corresponding to the paging group information where the terminal is located.

In embodiments of the present disclosure, the determination module is configured to, in response to the terminal being in an idle state or an inactive state, determine a paging group resource among paging group resources corresponding to the idle state or the inactive state, and the paging group resource corresponding to the idle state is the same as the paging group resource corresponding to the inactive state.

In embodiments of the present disclosure, the determination module 202 is further configured to, in response to the terminal not being included in the paging group information, determine that a paging group resource corresponding to the terminal is a public paging group resource or a default paging group resource.

In embodiments of the present disclosure, the receiving module 201 is configured to receive, based on a broadcast signaling or a dedicated signaling, the indication message sent by the radio access network device.

In embodiments of the present disclosure, the receiving module 201 is configured to, in response to the terminal being an inactive terminal, receive, based on a RRC release message, the indication message sent by the radio access network device.

FIG. 30 illustrates a block diagram of an apparatus for saving power according to an embodiment of the present disclosure. Referring to FIG. 30, the apparatus for saving the power 300 is applied to a core network device and includes a receiving module 301 and a determination module 302.

According to a sixth aspect of embodiments of the present disclosure, there is provided an apparatus for saving power, and the apparatus includes:

The receiving module 301 is configured to receive group resource density request information sent by a radio access network device, and the group resource density request information is configured to request a paging resource density of a paging group resource from the core network. The determination module 302 is configured to determine the paging resource density of the paging group resource based on the group resource density request information.

In embodiments of the present disclosure, the apparatus further includes: a sending module 303.

The sending module 303 is configured to send group resource density response information to the radio access network device, and the group resource density response information is configured to indicate the paging resource density of the paging group resource.

Regarding the apparatus in the foregoing embodiments, a specific manner in which each module executes operations has been described in detail in embodiments related to the method, and will not be described in detail here.

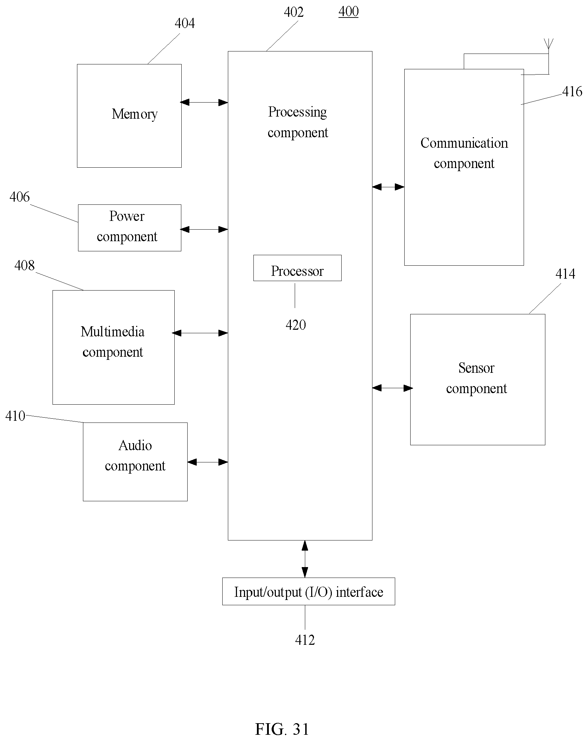

FIG. 31 illustrates a block diagram of a device 400 for saving power according to an embodiment of the present disclosure. For example, the device 400 may be a mobile phone, a computer, a digital broadcast terminal, a messaging apparatus, a gaming console, a tablet, a medical apparatus, exercise equipment, a personal digital assistant, etc.

Referring to FIG. 31, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone (MIC) configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 may access a wireless network based on a communication standard, such as WiFi, 2G, or 3G, or a combination thereof. In an embodiment, the communication component 416 receives a broadcast signal or broadcast associated information from an external broadcast management system via a broadcast channel. In an embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment, the device 400 may be implemented with one or more application specific integrated circuits (ASICs), digital signal processors (DSPs), digital signal processing apparatuses (DSPDs), programmable logic apparatuses (PLDs), field programmable gate arrays (FPGAs), controllers, micro-controllers, microprocessors, or other electronic components, for performing the above described methods.

In an embodiment, there is also provided a non-transitory computer readable storage medium including instructions, such as the memory 404 including instructions, the above instructions may be executed by the processor 420 in the device 400 for performing the above-described methods. For example, the non-transitory computer-readable storage medium may be a ROM, a Random Access Memory (RAM), a CD-ROM, a magnetic tape, a floppy disc, an optical data storage device, and the like.

FIG. 31 illustrates a block diagram of a device 500 for saving power according to an embodiment of the present disclosure. For example, the device 500 may be provided as a server. Referring to FIG. 31, the device 500 includes a processing component 522, which further includes one or more processors and a memory resource represented by a memory 532 for storing instructions executable by the processing component 522, such as an application program. The application program stored in the memory 532 may include one or more modules, each corresponding to a set of instructions. In addition, the processing component 522 is configured to execute the instructions to execute the aforementioned method.

The device 500 may also include: a power component 526 configured to perform power management of the device 500, a wired or wireless network interface 550 configured to connect the device 500 to the network, and an input/output (I/O) interface 558. The device 500 may operate an operating system stored in the memory 532, such as Windows Server TM, Mac OS XTM, UnixTM, LinuxTM, FreeBSDTM, or the like.

It should be further understood that the term "a plurality of" or "multiple" in the present disclosure refers to two or more than two, and other quantifiers are similar. The term "and/or" describes an association relationship between associated objects, and represents that there may exist three relationships. For example, A and/or B may represent three conditions in which A independently exists, A and B both exist and B independently exists. The character "/" generally represents that the associated objects form an "or" relationship. The singular forms "a", "the" and "said" are intended to include the plural forms as well, unless the context clearly indicates otherwise.

It should be further understood that, although the terms first, second, etc. may be used to describe various information, such information should not be limited to these terms. These terms are only used to distinguish the same type of information from each other, and do not imply a specific order or importance. In fact, expressions such as "first" and "second" can be used interchangeably For example, without departing from the scope of the present disclosure, the first information may also be referred to as the second information, and similarly, the second information may also be referred to as the first information.

It can be further understood that although the operations in embodiments of the present disclosure are described in a specific order in the drawings, they should not be understood as requiring that the operations should be performed in the specific order shown or in a serial order, or that perform all the operations shown to get the desired result. In certain environments, multitasking and parallel processing may be advantageous.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

**Claims**

1. A method for saving power, applied to a radio access network device, and comprising:

   determining a mapping relationship between paging group information and a paging group resource; and
   sending indication information to a terminal, wherein the indication information is configured to indicate the mapping relationship.

2. The method for saving the power according to claim 1, wherein the determining the mapping relationship between the paging group information and the paging group resource comprises:

determining a paging group resource set; and
determining in the paging resource set, based on the paging group information, the paging group resource corresponding to the paging group information.

3. The method for saving the power according to claim 1, wherein the determining the mapping relationship between the paging group information and the paging group resource comprises:

determining a plurality of paging group information sets comprising one or more paging group information;
determining a paging group resource set corresponding to a paging group information set, wherein the paging group resource set comprises one or more paging group resources; and
determining, based on the paging group resource set corresponding to the paging group information set, a mapping relationship between each paging group information and a paging group resource.

4. The method for saving the power according to claim 1 or 2, wherein the determining the mapping relationship between the paging group information and the paging group resource comprises:

determining an idle paging group resource set and/or an inactive paging group resource set;
determining in the idle paging group resource set a paging group resource corresponding to idle paging information in the paging group information; and/or,
determining in the inactive paging group resource set a paging group resource corresponding to inactive paging information in the paging group information.

5. The method for saving the power according to claim 1 or 2, wherein the determining the mapping relationship between the paging group information and the paging group resource comprises:

determining an idle paging group resource set and idle paging group information; and
determining in the idle paging group resource set an idle paging group resource corresponding to the idle paging group information.

6. The method for saving the power according to claim 1 or 2, wherein the determining the mapping relationship between the paging group information and the paging group resource comprises:

determining an inactive paging group resource set and inactive paging group information; and
determining in the inactive paging group resource set an inactive paging group resource corresponding to the inactive paging group information.

7. The method for saving the power according to claim 1 or 2, wherein the determining the mapping relationship between the paging group information and the paging group resource comprises:

determining a paging group resource set, wherein the paging group resource set comprises a plurality of idle paging group resources and/or a plurality of inactive paging group resources;
determining an idle paging group resource, among the plurality of idle paging group resources, corresponding to idle paging group information; and/or
determining an inactive paging group resource, among the plurality of inactive paging group resources, corresponding to inactive paging group information.

8. The method for saving the power according to claim 1 or 2, wherein the determining the mapping relationship between the paging group information and the paging group resource comprises:

determining a paging group resource set, and in response to the paging group information being idle paging group information, determining in the paging group resource set a paging group resource corresponding to the idle paging group information; or,
determining the paging group resource set, and in response to the paging group information being inactive paging group information, determining in the paging group resource set a paging group resource corresponding to the inactive paging group information.

9. The method for saving the power according to claim 2, wherein the determining the mapping relationship between the paging group information and the paging group resource comprises:

determining a paging group resource set and idle paging group information and/or inactive state paging group information; and
determining in the paging group resource set a same paging group resource for the idle paging group information and/or the inactive paging group information.

**10.** The method for saving the power according to claim 1, wherein the method further comprises:
in response to the paging group resource not corresponding to the paging group information, determining that the paging group resource is a public paging group resource or a default paging group resource.

**11.** The method for saving the power according to claim 1, wherein the method further comprises:
sending group resource density request information to a core network device, wherein the request information is configured to request a paging resource density of the paging group resource from the core network.

**12.** The method for saving the power according to claim 10, wherein the method further comprises:

receiving group resource density response information sent by the core network, wherein the group resource density response information is configured to indicate the paging resource density of the paging group resource; and
determining the paging resource density of the paging group resource based on the group resource density response information.

**13.** The method for saving the power according to claim 1, wherein the sending the indication information to the terminal comprises:
sending the indication message to the terminal based on a broadcast signaling or a dedicated signaling.

**14.** The method for saving the power according to claim 13, wherein the sending the indication information to the terminal comprises:
in response to the terminal being an inactive terminal, sending the indication information based on a Radio Resource Control (RRC) release message.

**15.** A method for saving power, applied to a terminal, and comprising:

receiving an indication message sent by a radio access network, wherein the indication information is configured to indicate a mapping relationship, and the mapping relationship is a mapping relationship between paging group information and a paging group resource; and
determining, based on the indication message, a paging group resource corresponding to paging group information where the terminal is located.

**16.** The method for saving the power according to claim 15, wherein the determining, based on the indication message, the paging group resource corresponding to the paging group information where the terminal is located comprises:
in response to the terminal being comprised in the paging group information, determining, based on the mapping relationship between the paging group information and the paging group resource, the paging group resource corresponding to the paging group information where the terminal is located.

**17.** The method for saving the power according to claim 15, wherein a paging group information group set comprises one or more paging group information; and
the determining, based on the indication message, the paging group resource corresponding to the paging group information where the terminal is located comprises:

in response to the paging group information where the terminal is located being comprised in the paging group information set, determining a paging group resource set corresponding to the paging group information set; and
based on the mapping relationship between the paging group information and the paging group resource, determining in the paging group resource set the paging group resource corresponding to the paging group information where the terminal is located.

**18.** The method for saving the power according to claim 15, wherein the determining, based on the indication message, the paging group resource corresponding to the paging group information where the terminal is located comprises:

in response to the terminal being in an idle state, determining in an idle paging group resource set the paging group resource corresponding to the paging group information where the terminal is located; or in response to the terminal being in an inactive state, determining in an inactive paging group resource set the paging group resource corresponding to the paging group information where the terminal is located.

19. The method for saving the power according to claim 15, wherein a paging group resource set comprises a plurality of idle paging group resources and a plurality of inactive paging group resources; and the determining, based on the indication message, the paging group resource corresponding to the paging group information where the terminal is located comprises:

in response to the terminal being in an idle state, determining the paging group resource, among the plurality of idle paging group resources comprised in the paging group resource set, corresponding to the paging group information where the terminal is located; or in response to the terminal being in an inactive state, determining the paging group resource, among the plurality of inactive paging group resources comprised in the paging group resource set, corresponding to the paging group information where the terminal is located.

20. The method for saving the power according to claim 15, wherein the determining, based on the indication message, the paging group resource corresponding to the paging group information where the terminal is located comprises:

in response to the terminal being in an idle state, determining in a paging group resource set the paging group resource corresponding to the paging group information where the terminal is located; or, in response to the terminal being in an inactive state, determining in the paging group resource set the paging group resource corresponding to the paging group information where the terminal is located.

21. The method for saving the power according to claim 16, wherein the determining, based on the indication message, the paging group resource corresponding to the paging group information where the terminal is located comprises: in response to the terminal being in an idle state or an inactive state, determining a paging group resource among paging group resources corresponding to the idle state or the inactive state, wherein the paging group resource corresponding to the idle state is the same as the paging group resource corresponding to the inactive state.

22. The method for saving the power according to claim 15, wherein the method further comprises: in response to the terminal not being comprised in the paging group information, determining that a paging group resource corresponding to the terminal is a public paging group resource or a default paging group resource.

23. The method for saving the power according to claim 15, wherein the receiving the indication message sent by the radio access network comprises: receiving, based on a broadcast signaling or a dedicated signaling, the indication message sent by the radio access network device.

24. The method for saving the power according to claim 15, wherein the receiving the indication message sent by the radio access network device comprises: in response to the terminal being an inactive terminal, receiving, based on a RRC release message, the indication message sent by the radio access network device.

25. A method for saving power, applied to a core network device, and comprising:

receiving group resource density request information sent by a radio access network device, wherein the group resource density request information is configured to request a paging resource density of a paging group resource from the core network; and determining the paging resource density of the paging group resource based on the group resource density request information.

26. The method for saving the power according to claim 25, wherein the method further comprises: sending group resource density response information to the radio access network device, wherein the group resource density response information is configured to indicate the paging resource density of the paging group resource.

27. An apparatus for saving power, applied to a radio access network device, and comprising:

a determination module, configured to determine a mapping relationship between paging group information and a paging group resource; and

a sending module, configured to send indication information to a terminal, wherein the indication information is configured to indicate the mapping relationship.

28. An apparatus for saving power, applied to a terminal, and comprising:

a receiving module, configured to receive an indication message sent by a radio access network, wherein the indication information is configured to indicate a mapping relationship, and the mapping relationship is a mapping relationship between paging group information and a paging group resource; and

a determination module, configured to determine, based on the indication message, a paging group resource corresponding to paging group information where the terminal is located.

29. An apparatus for saving power, applied to a core network device, and comprising:

a receiving module, configured to receive group resource density request information sent by a radio access network device, wherein the group resource density request information is configured to request a paging resource density of a paging group resource from the core network; and

a determination module, configured to determine the paging resource density of the paging group resource based on the group resource density request information.

30. A communication device, comprising:

a processor; and

a memory, configured to store instructions executable by the processor;

wherein the processor is configured to perform the method for saving the power according to any one of claims 1-14, or perform the method for saving the power according to any one of claims 15-24, or perform the method for saving the power according to any one of claims 25-26.

31. A non-transitory computer-readable storage medium, wherein instructions in the storage medium, when executed by a processor of a mobile terminal, enables the mobile terminal to perform the method for saving the power according to any one of claims 1-14, or perform the method for saving the power according to any one of claims 15-24, or perform the method for saving the power according to any one of claims 25-26.

FIG. 1

FIG. 2

```
┌─────────────────────────────────────────────────────┐      S21
│                                                       │
│          Determine a paging group resource set        │
│                                                       │
└─────────────────────────────────────────────────────┘
                          │
                          ▼
┌─────────────────────────────────────────────────────┐      S22
│   Determine in the paging resource set, based on paging group │
│  information, a paging group resource corresponding to the paging │
│                     group information                  │
└─────────────────────────────────────────────────────┘
```

FIG. 3

```
┌─────────────────────────────────────────────────────┐      S31
│                                                       │
│     Determine a plurality of paging group information sets │
│                                                       │
└─────────────────────────────────────────────────────┘
                          │
                          ▼
┌─────────────────────────────────────────────────────┐      S32
│   Determining a paging group resource set corresponding to the │
│              paging group information sets             │
│                                                       │
└─────────────────────────────────────────────────────┘
                          │
                          ▼
┌─────────────────────────────────────────────────────┐      S33
│  Determine, based on the paging group resource set corresponding to │
│  the paging group information sets, a mapping relationship between │
│   each paging group information and a paging group resource │
└─────────────────────────────────────────────────────┘
```

FIG. 4

```
┌─────────────────────────────────────────────────────┐      S41
│  Determine an idle paging group resource set and/or an inactive │
│               paging group resource set               │
└─────────────────────────────────────────────────────┘
```

FIG. 5

S51

Determine in an idle paging group resource set a paging group resource corresponding to idle paging information in paging group information

FIG. 6

S61

Determine in an inactive paging group resource set a paging group resource corresponding to inactive paging information in paging group information

FIG. 7

S71

Determine an idle paging group resource set and idle paging group information

S72

Determine in the idle paging group resource set an idle paging group resource corresponding to the idle paging group information

FIG. 8

S81

Determine an inactive paging group resource set and inactive paging group information

S82

Determine in the inactive paging group resource set an inactive paging group resource corresponding to the inactive paging group information

FIG. 9

S91

Determine a paging group resource set

FIG. 10

S101

Determine an idle paging group resource, among a plurality of idle paging group resources, corresponding to idle paging group information

FIG. 11

S111

Determine an inactive paging group resource, among a plurality of inactive paging group resources, corresponding to inactive paging group information

FIG. 12

S121

Determine a paging group resource set, and in response to paging group information being idle paging group information, determine in the paging group resource set a paging group resource corresponding to the idle paging group information

FIG. 13

S131

Determine a paging group resource set, and in response to paging group information being inactive paging group information, determine in the paging group resource set a paging group resource corresponding to the inactive paging group information

FIG. 14

S141

Determine a paging group resource set and idle paging group information and/or inactive state paging group information

S142

Determine in the paging group resource set the same paging group resource for the idle paging group information and/or the inactive paging group information

FIG. 15

S151

In response to a paging group resource not corresponding to paging group information, determine that the paging group resource is a public paging group resource or a default paging group resource

FIG. 16

S161

Send group resource density request information to a core network device

FIG. 17

S171

Receive group resource density response information sent by a core network

S172

Determine a paging resource density of a paging group resource based on the group resource density response information

FIG. 18

S181

Send an indication message to a terminal based on a broadcast signaling or a dedicated signaling

FIG. 19

S191

In response to a terminal being an inactive terminal, send indication information based on a RRC release message

FIG. 20

S201

Receive an indication message sent by a radio access network

S202

Determine, based on the indication message, a paging group resource corresponding to paging group information where a terminal is located

FIG. 21

S211

In response to paging group information where a terminal is located being included in a paging group information set, determine a paging group resource set corresponding to the paging group information set

S212

Based on a mapping relationship between paging group information and a paging group resource, determine in the paging group resource set the paging group resource corresponding to the paging group information where the terminal is located

FIG. 22

In response to a terminal not being included in paging group information, determine that a paging group resource corresponding to the terminal is a public paging group resource or a default paging group resource

S221

FIG. 23

Receive, based on a broadcast signaling or a dedicated signaling, an indication message sent by a radio access network device

S231

FIG. 24

In response to a terminal being an inactive terminal, receive, based on a RRC release message, an indication message sent by a radio access network device

S241

FIG. 25

Receive group resource density request information sent by a radio access network device

S251

Determine a paging resource density of a paging group resource based on the group resource density request information

S252

FIG. 26

Send group resource density response information to a radio access network device

S261

FIG. 27

100

101 — Determination module

102 — Sending module

103 — Receiving module

FIG. 28

200

201 — Receiving module

202 — Determination module

FIG. 29

300

301 — Receiving module

302 — Determination module

303 — Sending module

FIG. 30

FIG. 31

500

Processing component 522

Power component 526

Memory 532

Network interface 550

Input/output (I/O) interface 558

FIG. 32

## INTERNATIONAL SEARCH REPORT

| | International application No. |
|---|---|
| | **PCT/CN2021/095342** |

**A. CLASSIFICATION OF SUBJECT MATTER**

H04W 52/00(2009.01)i; H04W 68/00(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT: 唤醒信号, 终端, 分组, 资源, 对应, 寻呼时机, 次数, WUS, PO, UE, group, resource, related, paging, times

**C. DOCUMENTS CONSIDERED TO BE RELEVANT**

| Category* | Citation of document, with indication, where appropriate, of the relevant passages | Relevant to claim No. |
|---|---|---|
| X | CN 111373806 A (ALCATEL-LUCENT SHANGHAI BELL CO., LTD. et al.) 03 July 2020 (2020-07-03) see description, paragraphs [0118]-[0319] | 1-31 |
| X | CN 112586041 A (LG ELECTRONICS INC.) 30 March 2021 (2021-03-30) see description, paragraphs [0281]-[0520] | 1-31 |
| X | CN 110839274 A (HUAWEI TECHNOLOGIES CO., LTD.) 25 February 2020 (2020-02-25) see description, paragraphs [0005]- [0048] | 1-24, 27, 28, 30, 31 |
| A | WO 2015042862 A1 (HUAWEI TECHNOLOGIES CO., LTD.) 02 April 2015 (2015-04-02) entire document | 1-31 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2021** | **05 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/095342**

| Patent document cited in search report | | | Publication date (day/month/year) | Patent family member(s) | | | Publication date (day/month/year) |
|---|---|---|---|---|---|---|---|
| CN | 111373806 | A | 03 July 2020 | WO | 2019095323 | A1 | 23 May 2019 |
| CN | 112586041 | A | 30 March 2021 | WO | 2020032726 | A1 | 13 February 2020 |
| | | | | DE | 112019003998 | T5 | 22 April 2021 |
| CN | 110839274 | A | 25 February 2020 | CN | 110839274 | B | 22 June 2021 |
| | | | | US | 2021176729 | A1 | 10 June 2021 |
| | | | | WO | 2020034970 | A1 | 20 February 2020 |
| | | | | EP | 3833115 | A1 | 09 June 2021 |
| WO | 2015042862 | A1 | 02 April 2015 | RU | 2016116251 | A | 01 November 2017 |
| | | | | BR | 112016006695 | A8 | 27 February 2020 |
| | | | | US | 2016212727 | A1 | 21 July 2016 |
| | | | | EP | 3043607 | A4 | 14 December 2016 |
| | | | | CN | 104838709 | B | 09 July 2019 |
| | | | | CN | 104838709 | A | 12 August 2015 |
| | | | | US | 10448359 | B2 | 15 October 2019 |
| | | | | EP | 3043607 | A1 | 13 July 2016 |
| | | | | MX | 360548 | B | 26 October 2018 |
| | | | | RU | 2642333 | C2 | 24 January 2018 |
| | | | | MX | 2016003901 | A | 28 October 2016 |
| | | | | ZA | 201602868 | B | 30 August 2017 |
| | | | | BR | 112016006695 | A2 | 01 August 2017 |
| | | | | EP | 3474612 | A1 | 24 April 2019 |
| | | | | EP | 3043607 | B1 | 07 November 2018 |

Form PCT/ISA/210 (patent family annex) (January 2015)